# EUROPEAN PATENT SPECIFICATION

(11) **EP 1 077 319 B1**
(45) Date of publication and mention of the grant of the patent: **20.04.2005**
(21) Application number: 00116957.2
(22) Date of filing: 07.08.2000
(51) Int. Cl.: F02D 41/02, F02D 21/08

(54) **Method and system for controlling a diesel engine**
Verfahren und Vorrichtung zur Steuerung einer Dieselbrennkraftmaschine
Méthode et dispositif pour contrôler un moteur diesel

(30) Priority: 16.08.1999 JP 22959699; 16.08.1999 JP 22959499; 16.05.2000 JP 2000142954
(43) Date of publication of application: 21.02.2001
(73) Proprietor: Mazda Motor Corporation, Aki-gun, Hiroshima (JP)
(72) Inventor: Watanabe, Tomomi, Fuchu-cho, Aki-gun, Hiroshima (JP); Saito, Tomoaki, Fuchu-cho, Aki-gun, Hiroshima (JP); Terazawa, Yasuyuki, Fuchu-cho, Aki-gun, Hiroshima (JP); Takami, Akihide, Fuchu-cho, Aki-gun, Hiroshima (JP); Hayashibara, Hiroshi, Fuchu-cho, Aki-gun, Hiroshima (JP); Kondou, Terunori, Fuchu-cho, Aki-gun, Hiroshima (JP); Kataoka, Motoshi, Fuchu-cho, Aki-gun, Hiroshima (JP)
(74) Representative: Kirschner, Klaus Dieter

(56) References cited:
- EP-A- 0 732 485
- DE-A- 19 847 874
- DE-C- 19 543 219
- DE-C- 19 716 275
- DE-C- 19 750 226

## Description

The present invention relates to a method and system for controlling a diesel engine equipped with a NOx absorbent which absorbs NOx in excess oxygen exhaust gas in an exhaust line so that the NOx absorbent absorbs NOx under ordinary engine operation conditions.

Typically, three-way catalysts are known as a catalytic operative to simultaneously and quite effectively lowers emission levels of HC, CO and NOx in exhaust gas from an internal combustion engine so as thereby to purify the exhaust gas at an approximately stoichiometric air-to-fuel ratio. In gasoline engines, in combination of using such a three-way catalyst, it is general to implement fuel injection control to control an air-to-fuel ratio near to the stoichiometric air-to-fuel ratio in most of the drive regions except for a full-load drive region. However, in an overall region of ordinary engine operation conditions of such a diesel engine, a mean air-to-fuel ratio in a combustion chamber (which is hereafter referred to as combustion chamber air-to-fuel ratio) is in an extremely lean state (for example, A/F ≥ 18), so the three-way catalyst cannot be effective. Furthermore, when the mean combustion chamber air-to-fuel ratio is in the extremely lean state, oxygen concentration in exhaust gas becomes extremely high, so that it is difficult to reduce NOx emissions sufficiently in such an atmosphere, as a result of which it is difficult to purify the exhaust gas.

In this regard, there has been known a technology in which utilization is made of a so-called NOx absorbent that absorbs NOx in an oxygen excess exhaust gas with more-than-a predetermined oxygen concentration of., or example, 4 % and releases the absorbed NOx as the oxygen concentration is lowered. However, it is necessary for the NOx absorbent to carry out so-called refreshing that is referred to releasing the absorbed NOx before the absorption capacity declines, since the NOx absorbent cause a decline in absorption capacity with an increase in the absorbed amount of NOx. In a diesel engine control system such as disclosed in, for example, Japanese Unexamined Patent Publication No. 6-212961, unburnt fuel (gas oil) is supplied as a reducing agent into exhaust gas when the above-noted refreshing is required so as to lower the oxygen concentration of the exhaust gas due to consumption of oxygen by the reducing agent In other words, in this case, fuel is additionally injected in a period from a mid-expansion stroke of a cylinder to an exhaust stroke, in addition to an ordinary fuel injection. The additional fuel is activated by a high-temperature burnt gas in a combustion chamber with the result of taking strong reducing power, so as thereby to promote the NOx absorbent to release NOx therefrom and sufficiently reduce the NOx to purify the exhaust gas.

In order to control generation itself of NOx accompanying combustion of fuel, it is popular to lower the peak of combustion gas temperature in the combustion chamber by recirculating partly the exhaust gas to the combustion chamber through an exhaust gas recirculation passage which connects the intake and exhaust systems mutually. In a diesel engine control system such as disclosed in, for example, Japanese Unexamined Patent Publication, when refreshing the NOx absorbent, the oxygen concentration of exhaust gas is lowered by changing the mean combustion chamber air-to-fuel ratio to a rich state, which is achieved through a reduction in the amount of fresh air that is introduced from the outside of the engine by either increasing the amount of recirculation exhaust gas admitted through the recirculation passage or closing the intake throttle valve while restraining a change in engine output by increasing the amount of fuel injection so as to compensate a drop in engine output due to the reduction in the amount of fresh air.

However, in the diesel engine control system in which fuel is additionally injected in a expansion stroke or an exhaust stroke for refreshing the NOx absorbent as disclosed in Japanese Unexamined Patent Publication No. 6 - 212961, because a rapid increase of smoke possibly occurs due to an occurrence of what is called fuel baking if the additional fuel injection is made too early, the additional fuel injection can not be made at a timing before a mid-expansion stroke. In consequence, most of the fuel additionally injected is unburnt and discharged from the combustion chamber, so that the diesel engine control system is hardly acceptable as a practical technique because of serious deterioration of specific fuel consumption On the other hand, in the diesel engine control system disclosed in Japanese Unexamined Patent Publication No. 7-279718, when reducing the amount of fresh air by only closing the intake throttle valve for refreshing the NOx absorbent; deterioration of specific fuel consumption occurs due to an increase in resistance against intake air in addition to an occurrence of a serious increase of smoke due to aggravation of fuel combustion. Further, when reducing the amount of fresh air by increasing the amount of exhaust gas recirculalion, it is practically impossible to provide an increase in the amount of fuel injection correspondingly to a reduction in the amount of fresh air because there is a delayed flow of recirculalion exhaust gas (a response delay of an actual increase in the amount of exhaust gas recirculation to the exhaust gas recirculation amount increasing control) and/or a great deviation of amounts of fuel that are delivered into respective combustion chambers of the engine, so that the transitional combustion chamber air-to-fuel ratio changes greatly, as a result of which emission levels of NOₓ and smoke rise and a torque shock that the driver feels unpleasant occurs.

DE 197 50 226 C1 discloses a system for controlling a diesel engine as cited in the preamble of claim 1 and in particular system for controlling a diesel engine which is equipped with a fuel injector operative to spray fuel directly into a combustion chamber of said diesel engine and a NOₓ absorbent disposed in an exhaust line of said diesel engine and operative to absorb NOₓ in an exhaust gas having a excessively high oxygen concentration and release said NOₓ as said oxygen concentration lowers, comprising fuel injection control means for controlling fuel injection through said fuel injector according at least to operating conditions of said diesel engine, and fuel injection correction means for providing an increase in an amount of fuel that is sprayed through said fuel injector so as to lower said oxygen concentration, thereby causing said NOₓ absorbent to release said NOₓ.

EP 0 732 485 disclosed an exhaust gas purification device in which a NOₓ absorbent is disposed in the exhaust gas passage of a diesel engine. At the time when NOₓ should be released from the NOₓ absorbent, a control circuit of the engine reduces the excess air ratio of the engine, and switches the combustion mode of the engine from the normal diesel combustion which diffusive combustion is dominant in the combustion chamber of the engine, to the combustion mode in which pre-mixture fuel combustion is dominant to reduce the excess air ratio in combustion to thereby make the air-fuel ratio of the exhaust gas lower than or equal to the stoichiometric. In order to vaporize the fuel injected before the fuel combustion starts, it is desirable that the temperature within the cylinder be as high as possible. Therefore, vaporization of the fuel in the cylinder is promoted by injecting (recirculating) hot exhaust gas into the cylinder.

It is an object of the present invention provide a system for controlling a diesel engine equipped with an exhaust gas recirculalion system which evades a delay in responding to an increase in the amount of fuel injection for refreshing a NOₓ absorbent disposed in an exhaust line and in which the fluctuations in combustion chamber air-to-fuel ratio is restrained when increasing an amount of fuel injection in order to refresh an NOₓ absorbent so as thereby to provide a diesel engine control system which prevents an increase in generation of smoke and an occurrence of torque shock

The foregoing object of the present invention is accomplished by the diesel engine control system of claim 1. Advantageous embodiments of the invention are characterized in the subclaims. operation of the diesel engine.

According to a preferred embodiment of the present invention, a control system for a diesel engine which is equipped with a fuel injector operative to spray fuel directly into a combustion chamber of the diesel engine and a NOx absorbent disposed in an exhaust line of the diesel engine and operative to absorb NOx in an exhaust gas having an oxygen concentration which is excessively high and release the NOx as the oxygen concentration lowers comprises fuel injection control means for controlling fuel injection through the fuel injector according at least to operating conditions of the diesel engine, and fuel injection correction means for providing an increase in an injection through the fuel injector so as to lower the oxygen concentration, thereby causing the NOx absorbent to release the NOx. The control system further comprises an exhaust gas recirculation passage through which the exhaust gas flows partly into an intake line of the diesel engine, exhaust gas regulation means for admitting and regulating an amount of the exhaust gas that is admitted into the intake line through the exhaust gas recirculation passage, and exhaust gas recirculation control means for controlling the exhaust gas regulating means so as to increase a value relating to an exhaust gas recirculation ratio prior to increasing the amount of fuel injection by the fuel injection correction means. The term "exhaust gas recirculation ratio" as used herein refers to a ratio of an amount of exhaust gas recirculation relative to a total amount of air that is introduced into the combustion chamber.

When forcing the NOx absorbent to release NOx during operation of the diesel engine, the exhaust gas recirculation control means controls the exhaust gas regulation means so as to increase a value relating to an exhaust gas recirculation ratio and, thereafter, the fuel injection correction means increases the amount of fuel injection so as thereby to bring a mean combustion chamber air-to-fuel ratio to a more rich state than an ordinary rich state. That is, the mean combustion chamber air-to-fuel ratio is prevented from being brought into an excessive rich state during increasing the amount of fuel injection by implementing regulation of the amount of exhaust gas recirculation which is accompanied by a relatively large response delay prior to increasing the amount of fuel injection, so as thereby to prevent a sharp increase in generation of smoke and an occurrence of torque shocks In still other words, if making simultaneously corrective increases in both amount of fuel injection and amount of exhaust gas recirculation, a mean combustion chamber air-to-fuel ratio gains a rich state due to a corrective increase in amount of fuel injection and, thereafter, gains a more rich state due to an increase in the amount of exhaust gas recirculation, i.e. due to a decrease in the amount of fresh intake air because the corrective increase in amount of fuel injection responds more responsive than the corrective increase in amount of exhaust gas recirculation. Accordingly, although, in order to prevent the mean combustion chamber air-to-fuel ratio from gaining an excessively rich state, a corrective increase in amount of fuel injection can be made in consideration of a scheduled increasein the amount of exhaust gas recirculation i.e. a decrease in the amount of fresh intake air, however, in this case, since an increase in the amount of exhaust gas recirculation is delayed, it is necessary not only to keep the mean combustion chamber air-to-fuel ratio in a rich state lower than an expected rich state but also to continue increasing the amount of fuel injection until a desired increase in the amount of exhaust gas recirculation is attained, which provides aggravation of fuel consumption. On the other hand, when making a corrective increase in amount of fuel injection so as to bring a mean combustion chamber air-to-fuel ratio to a target rich state leaving a scheduled increase in the amount of exhaust gas recirculation out of consideration, the mean combustion chamber air-to-fuel ratio tends to attain an excessively rich state due to an increase in the amount of exhaust gas recirculation that is provided after the increase in the amount of fuel injection. The diesel engine control of the present invention evades the problems.

The exhaust gas recirculation control means controls the exhaust gas regulation means so as to decrease a value relating to an exhaust gas recirculation ratio after completion of increasing the amount of fuel injection. The exhaust gas recirculation control means controls the exhaust gas regulation means to decrease the value relating to an exhaust gas recirculation following completion of increasing the amount of fuel injection when a release of NOx from the NOx absorbent ends.

In the diesel engine control system, the fuel injection control means may divide the fuel injection into primary fuel injection made at a point of time near a top dead center of a compression stroke and secondary fuel injection made separately from the primary fuel injection when the fuel injection correction means increases the amount of fuel injection. With the diesel engine control system, even though the amount of fuel that is sprayed is sizable as a whole because of a corrective increase in amount of fuel, A mixture of air and fuel vapors that are sprayed through the primary fuel injection is prevented from enriching in excess, so that an increase in generation of smoke is restrained.

The secondary fuel injection may be made in a period between the beginning of an intake stroke of each of cylinders of the diesel engine and a mid-point of an expansion stroke of the cylinder and, when causing the NOx absorbent to release the NOx, the exhaust gas recirculation control means controls the exhaust gas regulation means so as to increase the value to a specified value and the fuel injection correction means causes an increase in the amount of fuel for a specified period of time so as to lower the oxygen concentration after attainment of the specified value. With the diesel engine control system, although the secondary fuel injection provides the diesel engine with a tendency to increase output torque since the secondary fuel injection is made in a period between the beginning of an intake stroke and a mid-point of an expansion stroke, however, restraining the secondary fuel injection to continue for the specified period of time which is preferably two to three seconds lowers a torque shock When making the secondary fuel injection within a period over the intake and compression strokes, fuel sprayed through the secondary fuel injection is sufficiently mixed with air before the primary fuel injection, so as to bum well due to ignition of fuel sprayed through the primary fuel injection, which improves combustion with an effect of preventing or significantly reducing the amount of smoke. Further, although, when releasing NOx from the NOx absorbent, a delay in regulating the amount of exhaust gas recirculation is sizable due to that a corrective increase in amount of fuel injection is made after increasing a value relating to the exhaust gas recirculation ratio to a specified value, adverse repercussions of the large delay can be gotten rid of and an increase in generation of smoke and an occurrence of torque shocks are prevented by controlling fluctuations in mean combustion chamber air-to-fuel ratio. Moreover, since a corrective increase in amount of fuel injection is made not in the course of but after the end of increasing a value relating to exhaust gas recirculation ratio to the specified value, the combustion chamber air-to-fuel ratio is changed to a value as aimed, so that the oxygen concentration of exhaust gas is appropriately changed with an effect of refreshing the NOx absorbent without rising emission levels of NOx and other harmful components.

The fuel injection control means may divide the fuel injection into more-than-one parts at a point of time near a top dead center of a compression stroke of each of cylinders when the fuel injection correction means increases the amount of fuel. The divided fuel injection promotes fuel atomization and improves a mixed state of fuel, and a utilization rate of air in the combustion chamber is improved, besides. Generation of smoke is restrained owing to significant improvement of combustion.

The exhaust gas recirculation control means may feedback control the exhaust gas regulating means so as to attain a target exhaust gas recirculation ratio that is determined according to an operating condition of the diesel engine, and, when causing the NOx absorbent to release NOx, to increase the value relating to exhaust gas recirculation ratio by gradually changing the target exhaust gas recirculation ratio prior to making a connective increase in amount of fuel.

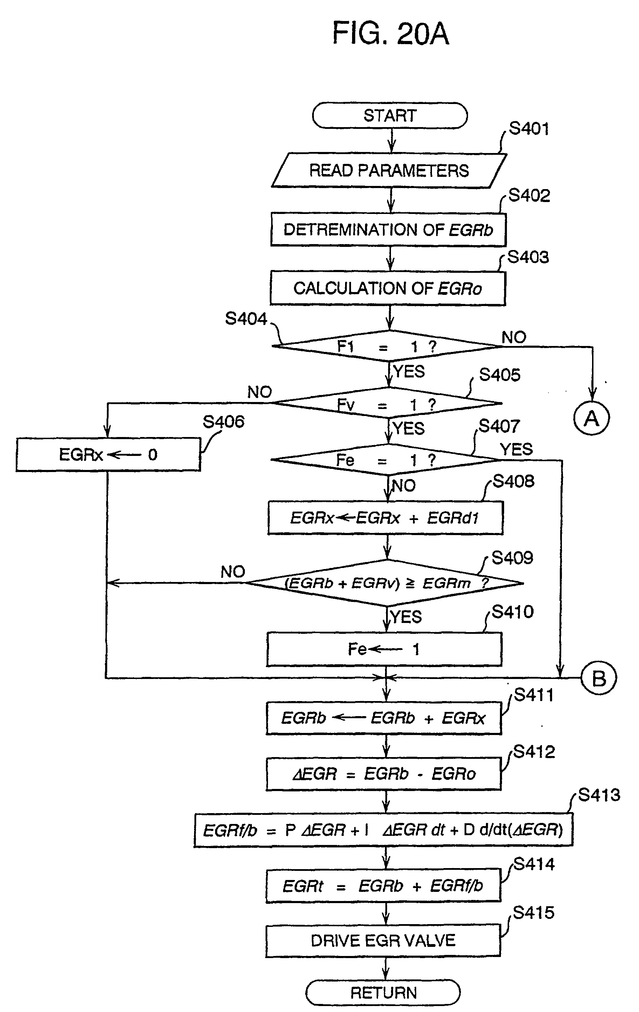

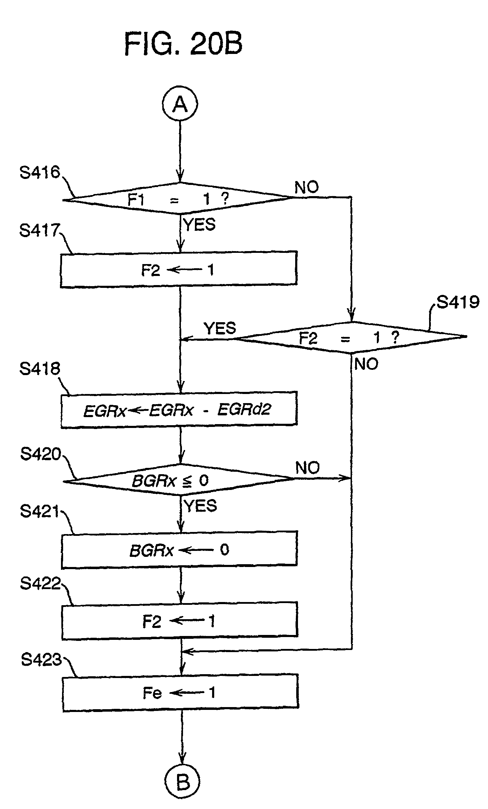

The above and other objects and features of the present invention will be clearly understood from the following description with respect to the preferred embodiment thereof when considered in conjunction with the accompanying drawings, in which:
Figure 1 is a schematic illustration showing the overall structure of a diesel engine control system of the invention;
Figure 2 is an illustration showing the overall structure of a diesel engine control system in accordance with a preferred embodiment of the invention;
Figure 3A is an explanatory cross-sectional views showing a turbine of a variable geometric turbosupercharger in which an A/R ratio is small;
Figure 3B is an explanatory cross-sectional views showing the turbine of the variable geometric turbosupercharger in which the A/R ratio is large;
Figure 4 is an illustration showing the structural of an exhaust gas recirculation valve and its associated drive system;
Figure 5 is a time chart illustrating injection timings at which pre-fuel injection, primary injection and post-fuel injection are made, respectively;
Figures 6A and 6B are respective parts of a flow chart illustrating a sequence routine of fuel injection control;
Figure 7 is a fuel injection amount control map with respect to accelerator travel and engine speed shown by way of example;
Figure 8 is a flow chart illustrating a first example of a sequence routine of exhaust gas recirculation control;
Figure 9 is an exhaust gas recirculation ratio control map with respect to accelerator travel and engine speed shown by way of example;
Figure 10 is a control map of the target amount of fresh air with respect to accelerator travel and engine speed shown by way of example;
Figure 11 is a diagram showing the relationship between excess air ratio and the amount of smoke;
Figure 12 is a control map of an exhaust gas recirculation feedback value with respect to deviation of the amount of fresh air shown by way of example;
Figure 13 is a flow chart illustrating a sequence routine of variable geometric turbosupercharger control;
Figure 14 is a nozzle cross-sectional area control map with to accelerator travel and engine speed shown by way of example;
Figure 15 is a comparative diagram showing the amount of smoke with respect to excess air ratio for split fuel injection and blanket fuel injection;
Figure 16 is a diagram showing change in the amount of smoke and specific fuel consumption rate with respect to post-fuel injection timing;
Figure 17 is a diagram showing the correspondence between change in the amount of smoke and specific fuel consumption rate;
Figure 18 is a time charts showing a change in nozzle cross-sectional area of the variable geometric turbosupercharger, a change in exhaust gas recirculation valve position, a change in the amount of fuel injection, and a change in mean combustion chamber air-to-fuel ratio, respectively, during refreshing a catalysts in the exhaust gas recirculation control shown in Figure 8;

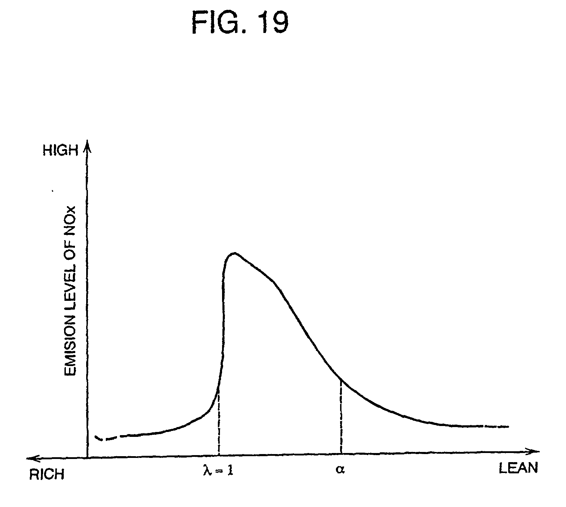

Figure 19 is a diagram showing the relationship between mean combustion chamber air-to-fuel ratio and NOx level in exhaust gas after a catalyst;
Figures 20A and 20B are respective parts of a flow chart illustrating a second example of a sequence routine of exhaust gas recirculation control;
Figure is a time chart showing a change in nozzle cross-sectional area of the variable geometric turbosupercharger, a change in exhaust gas recirculation valve position, a change in the amount of fuel injection, and a change in mean combustion chamber air-to-fuel ratio, respectively, during refreshing a catalysts in the exhaust gas recirculation control shown in Figure 20;

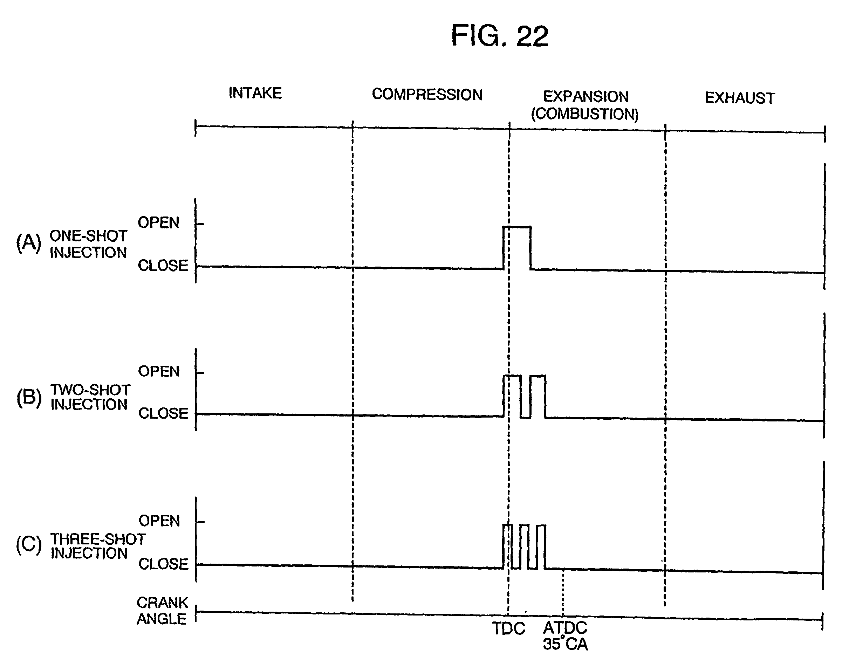

Figure 22 is a time chart illustrating injection timings at which split fuel injection are made for primary fuel injection, respectively;

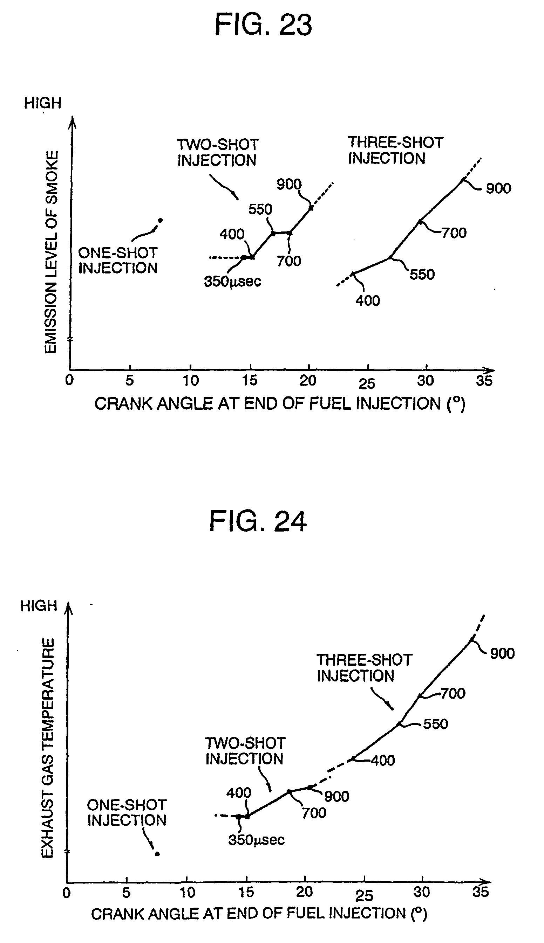

Figure 23 is a diagram showing a characteristic curve of a change in the amount of smoke when primary fuel injection is split into two and three parts;
Figure 24 is a diagram showing a characteristic curve of a change in exhaust gas temperature when primary fuel injection is split into two and three parts; and

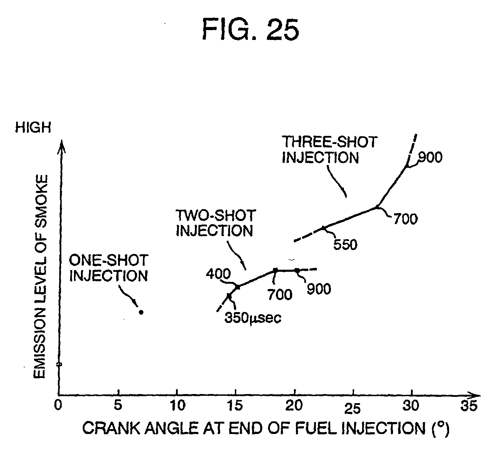

Figure 25 is a diagram showing a characteristic curve of a change in exhaust gas pressure when primary fuel injection is split into two and three parts.

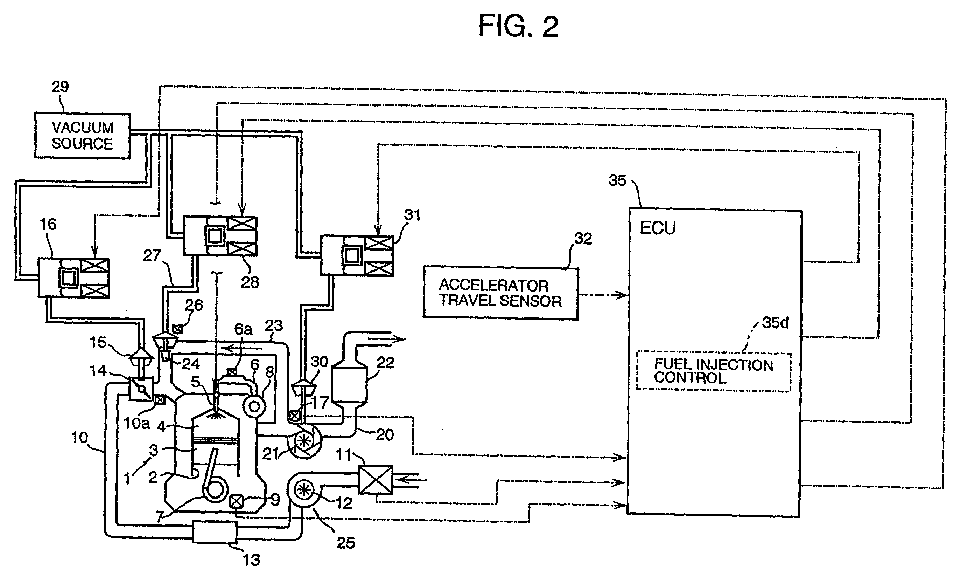

Referring to the drawings in detail, and in particular, to Figure 2 which shows the overall structure of a diesel engine control system 100 according to an embodiment of the invention, denoted by a reference numeral 1 is a multiple cylinder diesel engine carried in a vehicle. The diesel engine 1 has multiple cylinders 2 (only one of which is shown in the figure), in which pistons 3 are received to slide. A combustion chamber 4 is formed inside each cylinder 2 by the piston 3. Also, a fuel injector (fuel injection valve) 5 is located at the center of a top of the combustion chamber 4 with its nozzle faced to the combustion chamber 4. The fuel injector 5 is opened and closed at a predetermined injection timing to spray fuel directly into the combustion chamber 4. Each fuel injector 5 mentioned above is connected to a common rail (pressure accumulating chamber) 6 for accumulating high-pressure fuel therein, The common rail 6 is provided with a pressure sensor 6a operative to detect an internal fuel pressure as a common rail pressure and a high-pressure supply pump 8 which is driven by a crank shaft 7 of the diesel engine 1. The high-pressure supply pump 8 regulates the fuel pressure in the inside of the common rail 6, which is detected by the pressure sensor 6a Also, a crank angle sensor 9, which may take the form of electromagnetic pick-up well known to those in the art, is provided to detect a rotational angle of the crank shaft 8. The crank angle sensor 9 comprises a plate with peripheral projections for detection (not shown) secured to one end of the crank shaft 7 and an electromagnetic pickup (not shown) arranged correspondingly in position to the outer periphery of the plate. The electromagnetic pickup outputs a pulse signal in response to one of the peripheral projections arranged at regular angular intervals. The diesel engine 1 at one of opposite sides (the left side as viewed in the figure) has an intake passage 10 through which intake air is supplied into the combustion chamber 4 of the engine 1 via an air cleaner (not shown). The intake passage 10 at a downstream end is branched off through a surge tank (not shown) and connected respectively to the combustion chambers 4 of the cylinders 2 through intake ports. A charging pressure sensor 10a is provided in order to detect a supercharging pressure in the inside of the surge lank that is supplied to the cylinders 2. The intake passage 10 is further provided, in order from the upstream end to the downstream end, with a hot film type of air flow sensor 11 operative to detect an amount of fresh intake air which is introduced into the intake passage 10, a blower 12 which is driven by a turbine 21 of a turbosupercharger 25 (which is hereafter referred to as a turbocharger for simplicity) to compress intake air, an intercooler 13 operative to cool down the intake air that is compressed by this blower 12, and an intake throttle valve 14 as means operative to reduce the amount of fresh intake air by reducing an cross section of the intake passage 10. The intake throttle valve 14 is of a type comprising a butterfly valve which has a notch so as to admit intake air even while it is fully closed. Similar to an exhaust gas recirculation (EGR) valve 24 which will be described later, the intake throttle valve 14 is controlled to change its opening by controlling the level of negative pressure acting on a diaphragm 15 by an electromagnetic valve 16 for negative pressure control. Denoted by a reference numeral 20 is an exhaust passage into which exhaust gas is discharged from the combustion chamber 4 of each cylinder 2. The exhaust passage 20 at the upstream end is branched off and connected to the combustion chambers 4 of the cylinders 2 through exhaust ports and provided, in order from the upstream end to the downstream end, with a linear oxygen (O₂) sensor (which is hereafter referred to as a linear O₂ sensor) 17 operative to detect the oxygen concentration of exhaust gas, the turbine 21 which is driven by an exhaust gas flow and a catalyst 22 operative to lower emission levels of HC, CO and NOx and particulate in exhaust gas so as thereby to purify the exhaust gas.

The linear O₂ sensor 17 is used to detect an air-to-fuel ratio based on an oxygen concentration of exhaust gas, and has a characteristic wherein an output changes proportionally to an air-to-fuel ratio while the oxygen concentration of exhaust gas remains almost zero, in other words, when an air-to-fuel ratio changes within a specified region including a stoichiometric air-to-fuel ratio. The catalyst 22 has two catalyst layers formed on the wall surface of a number of pours or holes of a cordierite honeycomb substrate (not shown) which are directed in the same direction of an exhaust gas flow and has a characteristic such as to absorb NOx in exhaust gas with a high oxygen concentration, namely, excess oxygen exhaust gas and release the NOx that have been absorbed in a rich state where exhaust gas has lower in oxygen concentration than the excess oxygen exhaust gas so as thereby to purify the exhaust gas. That is to say, the catalyst 22 is of an absorption/reduction type which absorbs NOx when exhaust gas has a high oxygen concentration, i.e. a combustion chamber air-to-fuel ratio is on a lean side, and releases the NOx when the combustion chamber air-to-fuel ratio changes to a stoichiometric air-to-fuel ratio or a rich side from the stoichiometric air-to-fuel ratio with the result of lowering the oxygen concentration Specifically, the catalyst 22 is of a two-layer coating type comprising an inner catalyst layer which carries platinum (Pt) and at least one selected from a group including alkaline earth metals such as barium (Ba), alkali metals and rare earth metals as an NOx absorbent supported by alumina or ceria and an outer catalyst layer which carries noble metals such as platinum (Pt) supported by zeolite. The catalyst 22 is not limited to the above mentioned composition, and can be acceptable as long as containing, in place of barium, at least one selected from alkaline earth metals excepting barium (Ba), alkaline metals such as sodium (Na) and rare earth metals. In this case, zeolite may be employed as a support material of the inner catalyst layer in place of alumina or ceria. The catalyst 22 may otherwise comprise a single catalyst layer which carries a noble metal such as platinum (Pt), rhodium (Rh) and palladium (Pd), an alkaline metal such as potassium (K), an alkaline earth metal such as barium (Ba) supported by alumina or ceria.

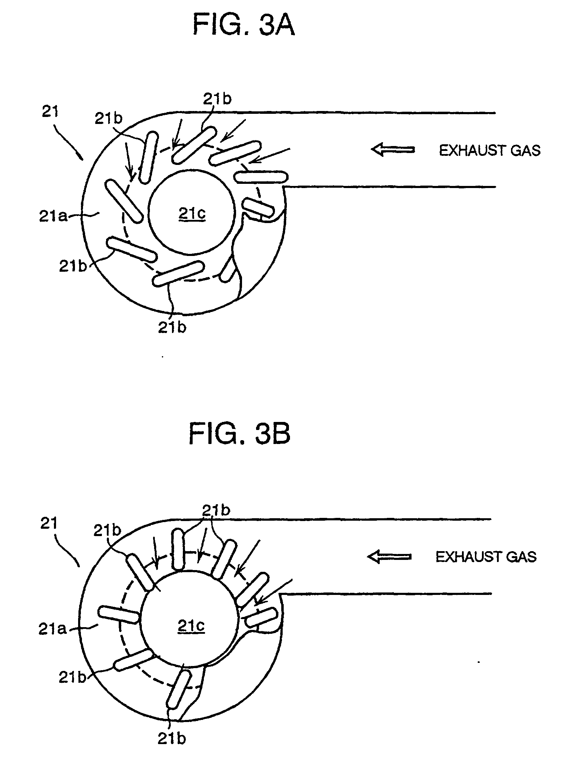

Referring to Figures 3A and 3B, the turbocharger 25 is of a variable geometric type and comprises the turbine 21 and the blower 12. The turbine 21 has a number of variable vanes 21b arranged in a turbine chamber 21a so as to surround the entire periphery of the turbine chamber 21a. These variable vane 21b are variable in angle to change a nozzle cross-sectional area (A) through which an exhaust gas stream flows through. In this variable geometric turbocharger 25, as shown in Figure 3A, the variable vanes 21b are positioned at small angles relative to the circumferential direction of the turbine 21 so as to narrow the nozzle cross-sectional area (A), which causes an increase in supercharging efficiency even in a region of low engine speeds where an exhaust gas flow is small. On the other hand, as shown in Figure 3B, the variable vanes 21b are directed to the center of the turbine 21 so as to broaden the nozzle cross-sectional area (A) with an effect of increasing supercharging efficiency together with restraining an increase in exhaust gas resistance even in a region of high engine speeds where an exhaust gas flow is large.

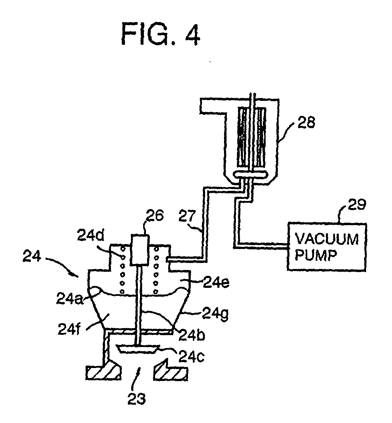

The exhaust passage 20 at the upstream from the turbine 21 is branched off and connected to an exhaust gas recirculation (EGR) passage 23 through which exhaust gas is partly recirculated into the intake stream. The exhaust gas recirculation passage 23 at the downstream end is connected to the intake passage 10 at a further downstream side relative to the intake throttle valve 14. The exhaust gas recirculation passage 23 at a point close to the downstream end is provided with the exhaust gas recirculation valve 24 which is operated by negative pressure to adjust its opening so as to admit partly exhaust gas from the exhaust passage 20 into the intake passage 10. The exhaust gas recirculation valve 24, as shown in Figure 3, comprises a valve rod 24b connected to a diaphragm 24a by which a valve box 24g is divided into upper and lower chambers 24e and 24f, and a valve body 24c which adjustably opens or closes the exhaust gas recirculation passage 23 so as to linearly change an area through which exhaust gas flows. The exhaust gas recirculation valve 24 is provided with a lift sensor 26 secured to one end of the valve rod 24b. The valve body 24c is forced by a spring 24d in a closing direction (downward as viewed in Figure 4). A vacuum passage 27 is connected between a vacuum pump (pressure source) 29 through an electromagnetic valve 28 which controls negative pressure. The negative pressure in the vacuuming chamber 24e, with which the exhaust gas recirculation valve 24 is driven, is controlled by energizing the electromagnetic valve 28 with a control signal (electric current) from an electronic control unit (ECU) 35 which will be described later to open or shut the vacuum passage 27, by means of which the exhaust gas recirculation passage 23 is linearly changed in its opening by the valve body 24c. Similarly to the exhaust gas recirculation valve 24, the turbocharger 25 is provided with a diaphragm 30 in connection with the variable vanes 21b of the turbine 21 such that the variable vanes 21b are controlled in angle relative to the turbine 21 by controlling a negative pressure on the diaphragm 30 by an electromagnetic valve 31 operative to control negative pressure. Although not shown in Figures 3A and 3B, the arrangement of vanes 21b is linked to a diaphragm, similar to that of the exhaust gas recirculation valve 24, operative to regulate vane openings according to a negative pressure applied thereto through an electromagnetic valve 31.

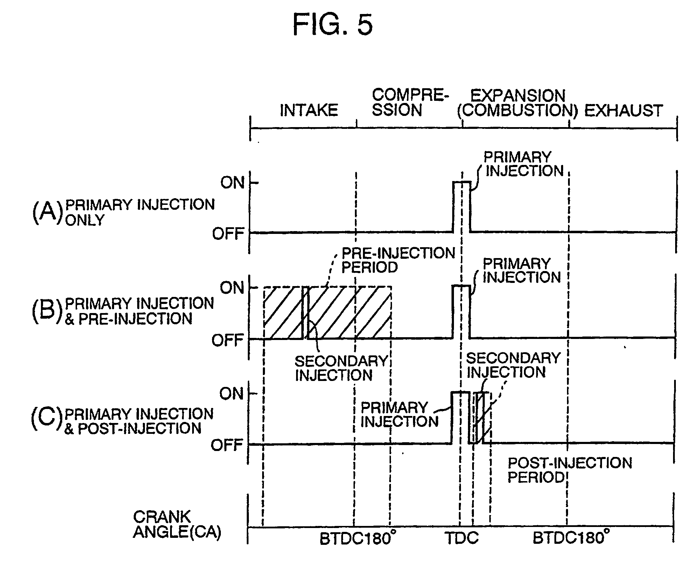

The electronic control unit 35 receives signals from the pressure sensor 6a, the crank angle sensor 9, the charging pressure sensor 10a, the air flow sensor 11, the linear O₂ sensor 17, the lift sensor 26 of the exhaust gas recirculation valve 24, and an accelerator travel sensor 32 for detecting a travel of an accelerator pedal (not shown), respectively, and provides control signals by which the fuel injector 5, the high-pressure supply pump 8, the intake throttle valve 14, the exhaust gas recirculation valve 24, the variable vanes 21b of the turbocharger 25 are operated. While the fuel injector 5 is controlled to spray a controlled amount of fuel at a controlled timing in accordance with engine operation conditions, at the same time, control of the common rail pressure, i.e. the fuel injection pressure, is made by the high-pressure supply pump 8. In addition, control of the amount of intake air by the intake throttle valve 14, control of the amount of exhaust gas recirculation by the exhaust gas recirculation valve 24, and control of the variable vanes 21b of the turbocharger 25 are carried out. More specifically, a fuel injection control map that prescribes a basic amount of fuel which is empirically determined in appropriately accordance with changes in target engine output torque and engine speed and is electronically stored in a memory. Ordinarily, a basic amount of fuel *Qbase* is read from the fuel injection control map based on a target engine output torque which is determined in accordance with an output signal from the accelerator travel sensor 32 and an engine speed which is determined in accordance with an output signal from the crank angle sensor 9. As shown in Figure 5(A), injection of the basic amount of fuel injection *Qbase* (which is hereafter refereed to as primary fuel injection) is made basically at a time near a top-dead center (TDC) of a compression stroke, as a result of which the engine operates with a combustion chamber air-to-fuel ratio on a lean side significantly far from a stoichiometric air-to-fuel ration. As will be described in detail later, in an excessive absorption state where the catalyst 22 is predicted to cause aggravation of absorbing performance based on the fact that an estimated value of NOx absorption of the catalyst 22 has exceeded a specified value, the primary fuel injection is implemented to spray an increased amount of fuel so as thereby to change the combustion chamber air-to-fuel ratio temporarily to the a stoichiometric air-to-fuel ration or one on a rich side from the stoichiometric air-to-fuel ration, and a secondary fuel injection is additionally implemented in a period from the beginning of an intake stroke to a mid-point of time of an expansion stroke as shown in Figures 5B or 5C. The implementation of the primary fuel injection restrains an increase of smoke in the exhaust gas and causes a rise in oxygen concentration of the exhaust gas and a rise in reducing component concentration with an effect of releasing a sufficient amount of NOx from the catalyst 22 so as thereby to purify the exhaust gas.

In Figures 5, an actual energizing time for which the fuel injector 5 remains open is determined on the basis of the amount of fuel to be sprayed taking a common rail pressure detected by the pressure sensor 6a into consideration.

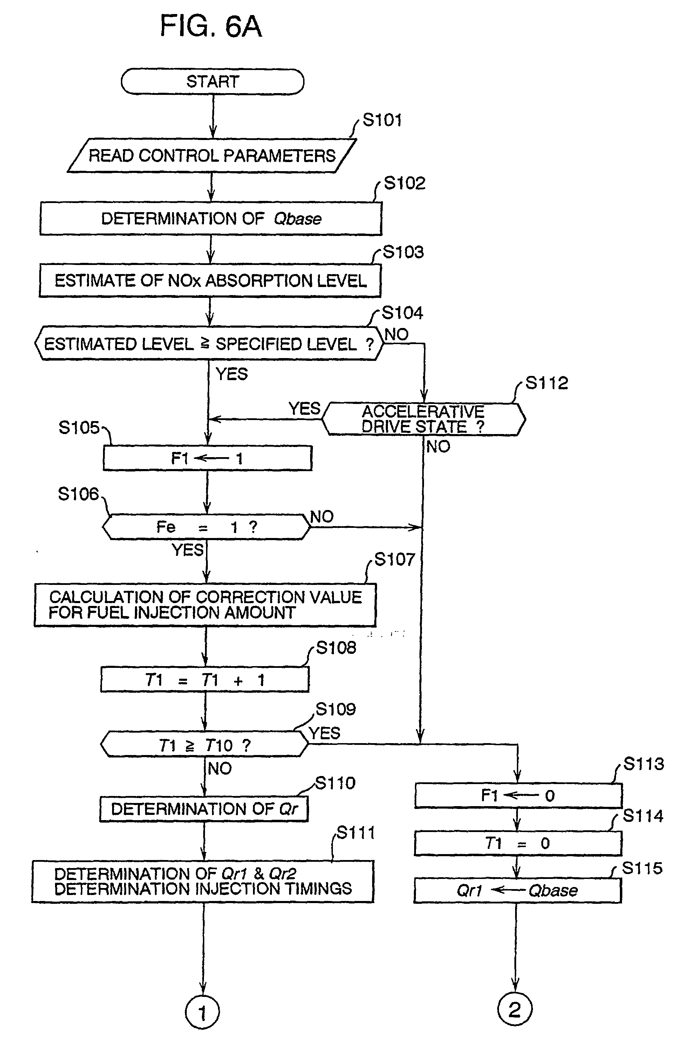

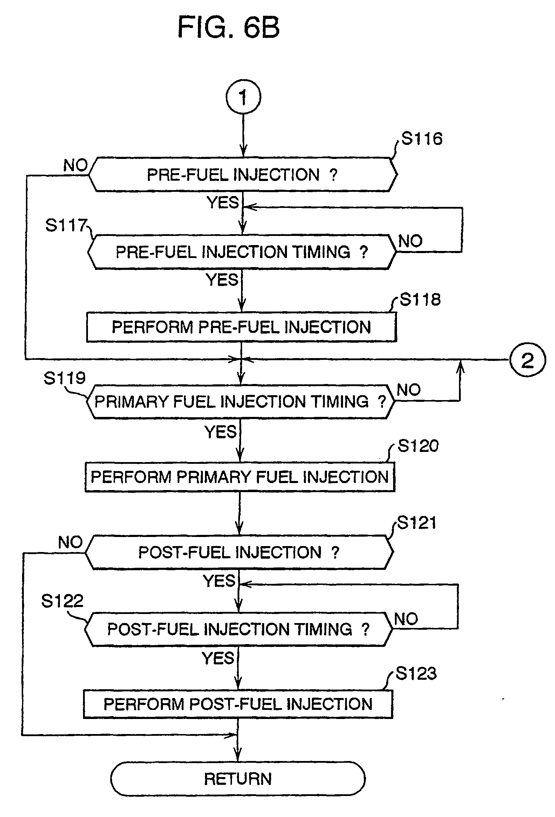

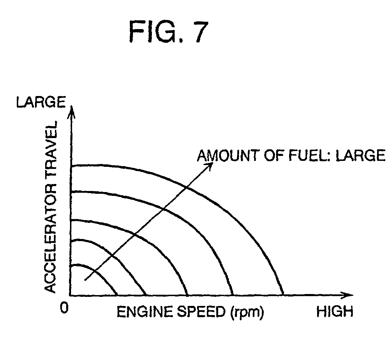

Figures 6A and 6B are respective parts of a flow chart illustrating a sequence routine of the fuel injection control which is carried out for every predetermined crank angle before an intake stroke independently per cylinder 2 and may, however, be carried out every predetermined period while the engine 1 operates in an ordinary engine operation region. When the sequence logic commences and control proceeds to a block at step S101 where various control parameters represented by signals from the pressure sensor 6a,, the crank angle sensor 9, the charging pressure sensor 10a, the air flow sensor 11, the linear O₂ sensor 17, the lift sensor 26 and the accelerator travel sensor 32. Subsequently, a basic amount of fuel *Qbase* and a basic fuel injection timing are determined with respect to a target engine output torque which is determined from the accelerator travel and an engine speed which is determined from the crank angle with reference to a fuel injection control map and a fuel injection timing control map, respectively, at step S102, In this instance, the fuel injection control map in which an optimum amount of fuel *Q* is empirically defined as a basic amount of fuel *Qbase* in accordance with a change in accelerator travel and engine speed as exemplary shown in Figure 7. In this map, the basic amount of fuel *Qbase* is defined so as to become larger with an increase in accelerator travel and with an increase in engine speed. Thereafter, subsequent to an estimate of a level of NOx absorption of the catalyst 22 made at step S103, a decision is made at step S104 as to whether or not the level of NOx absorption of the NOx absorbent of the catalyst 22 has reached a specified level. Then, when the level of NOx absorption is still below the specified level, another decision is made at step S112 as to whether or not the engine 1 is in an accelerative operation state. On the other hand, when the level of NOx absorption has reached or exceeded the specified level or when the engine 1 is in an accelerative operation state, then, a refresh flag F1 is set up to a state of "1" at step S105. The estimate of a level of NOx absorption may be made on the basis of an integrated value of a total mileage of the vehicle and a total amount of fuel consumed for the total mileage after correction according to engine operation condition. Otherwise, it may be acceptable to estimate it every specified time of engine operation (for example two to three minutes) that the level of NOx absorption has reached the specified level every. The refresh flag F1 which is set up in the state of "1" indicates that it is within a period for refreshing the catalyst 22 by controlling a combustion chamber air-to-fuel ratio to become on a rich state around the stoichiometric air-to-fuel ratio so that the catalyst 22 releases NOx therefrom. Subsequently, a decision is made at step S106 as to whether or not an exhaust gas recirculation (EGR) flag Fe is set up to a state of "1". As will be described later, the EGR flag Fe indicates whether the state of exhaust gas recirculation changes with progress of opening operation of the EGR valve 24 during exhaust gas recirculation control or whether the exhaust gas recirculation attained a stable state after completion of opening operation of the EGR valve 24. When the EGR flag Fe is up (Fe = 1), this indicates that the exhaust gas recirculation is in a stable state, then, at step S107, a calculation is made to determine a corrective increase in amount of fuel injection by which the basic amount of fuel *Qbase* is changed so as to bring the combustion chamber air-to-fuel to a value near the stoichiometric air-to-fuel ratio in the steady state. The corrective increase in amount of fuel injection is determined on the basis of an amount of fuel which delivers an approximately stoichiometric air-to-fuel ratio for the amount of intake air represented by a signal from the air flow sensor 11. After changing a timer count *T1*, which indicates a progress of the refreshing time, by an increment of one at step S108, a decision is made at step S108 as to whether or not the timer count *T1* has reached a specified timer count *T10*. This specified timer count *T10* corresponds to a time required to release NOx absorbed by the NOx absorbent roughly entirely when the combustion chamber air-to-fuel ratio is controlled to reach a value near to the stoichiometric air-to-fuel ratio. The specified timer count *T10* may be corrected in accordance with engine operation conditions such as, for instance, a time for which the engine 1 is continuously operated with a lean fuel mixture and/or an engine load with which the engine 1 operates for the lean operation time.

When the timer count *T1* has not yet reached the specified timer count *T10* at step S109, in other words, when it is still within the refreshing period, an amount of fuel *Qt* is determined by adding the corrective increase in amount of fuel injection *Qr* to the basic amount of fuel *Qbase* at step S110 Thereafter, the amount of fuel *Qt* is divided into two portions, an amount of fuel for the primary fuel injection (an amount of primary fuel injection) *Qr1*, an amount of fuel for the secondary fuel injection (an amount of secondary fuel injection) *Qr2* and timings *TQr1* and *TQr2* for the primary and secondary fuel injection are determined at step S111. The primary and secondary fuel injection timings are specifically shown in Figures 5A to 5C by way of example. The timing *TQr1* at which the fuel injector 5 opens to perform the primary fuel injection is advanced more from a standard timing which is set at 5° CA before a top dead center (BTDC 5° CA) as the amount of primary fuel injection *Qr1* becomes greater and, to the contrary, retarded more from the standard timing as the amount of primary fuel injection *Qr1* becomes smaller. Further, the timing *TQr2* at which the fuel injector 5 opens to perform the secondary fuel injection is set within either a pre-fuel injection period which is between the beginning of intake stroke and a mid-point of time of an compression stroke (for example, between BTDC 350° CA and BTDC 90° CA) as shown in Figure 5B or within a post-fuel injection period which is between an end of the primary fuel injection period and a mid-point of time of an expansion stroke (for example, between ATDC 15° CA and ATDC 25° CA, or between ATDC 10° CA and ATDC 25° CA if desirable) as shown in Figure 5C. and is further advanced with an increase in engine load and, on the contrary, retarded with a decrease in engine load. In other words, the secondary fuel injection, like the early split fuel injection, takes the form of pre-fuel injection that is caused earlier than the primary fuel injection while the engine 1 operates in the engine operation region of higher engine loads and, on the other hand, takes the form of post-fuel injection that is caused after the primary fuel injection while the engine 1 is in the engine operation region of lower engine loads. Moreover, a ratio of the amount of secondary fuel injection *Qr2* relative to the amount of primary fuel injection *Qr1* (which is referred to as a secondary-to-primary fuel injection ratio) is empirically determined beforehand with respect to engine load and engine speed and electronically stored in the form of a map. When the secondary fuel injection takes the form of pre-fuel injection, the secondary-to-primary fuel injection ratio is in a range between 8% and 23%, and changed higher in that range with an increase in engine load. On the other hand, when the secondary fuel injection takes the form of post-fuel injection, the secondary-to-primary fuel injection ratio is in a range between 30% and 50 %, and changed smaller with an increase in engine load in that range. Thus, when the level of NOx absorption of the NOx absorbent reaches the specified level and it is assumed that the catalyst 22 encounters a decline in NOx absorbing capacity in consequence, a correction is made to increase the amount of fuel *Q* so as to deliver a near stoichiometric air-to-fuel ratio, thereby refreshing the NOx absorbent At the same time, the amount of fuel is divided into two portions - an amount of primary fuel injection *Qr1* and an amount of secondary fuel injection *Qr2* with the result of restraining generation of smoke. The frequency of fuel injection is not limited to two times, and the primary fuel injection may be further divided into a multiple number of shots. Further, pilot fuel injection may be made right before implementation of the primary fuel injection.

Following the determination of the amounts of primary and secondary fuel injection *Qr1* and *Qr2* and timings *TQr1* and *TQr2* for the primary and secondary fuel injection at step S111, a decision is made at step S116 in Figure 6B as to whether or not it is expected to perform pre-fuel injection. When the secondary fuel injection timing *TQr2* is set within the pre-fuel injection period at step S109, this indicates that it is expected to perform pre-fuel injection, then, another decision is made at step S117 as to whether or not it has reached the pre-fuel injection timing. This decision is made based on a crank angle signal. After waiting until the pre-fuel injection timing has come at step S117, the pre-fuel injection is executed at step S118.

On the other hand, when it is determined that the engine 1 is out of the accelerative operation state as a result of the decision made at step S112, when the EGR flag Fe is down (Fe = 0) at step S106, this indicates that the exhaust gas recirculation is not in a stable state, or when it is determined that the timer count *T1* has reached the specified timer count *T10* at step S109, after resetting the refresh flag F1 to a state of "0" at step S113 and the timer count *T1* to zero at step S114, the basic amount of fuel *Qbase* is employed as the amount of primary fuel injection *Qr1* at step S115.

As described above, while the catalyst 22 is at a lower level of NOx absorption than the specified level, the amount of fuel is not increased when the engine is out of the accelerative operation state. In consequence, the primary fuel injection is ordinarily implemented, so that the engine 1 operates with an average combustion chamber air-to-fuel ratio on the lean side from the stoichiometric air-to-fuel ratio. On the other hand, the amount of fuel is increased regardless of the level of NOx absorption of the catalyst 22 when the engine is in the accelerative operation state, so that the catalyst 22 is refreshed at an increased frequency with an effect of remaining more higher NOx absorption performance. Moreover, the amount o fuel may be increased during transition to an accelerative operation state without spoiling driving feeling because a change in engine output is expected to accompany with the increase in the amount of fuel.

When it is not expected to perform pre-fuel injection at step S116, when the pre-fuel injection has been implemented at step S118, or after employing the basic amount of fuel injection *Qbase* as the amount of primary fuel injection *Qr1* at step S113 in the case where it is determined that the engine 1 is out of the accelerative operation state at step S112, in the case where the EGR flag Fe is down (Fe = 0) at step S106, or in the case where it is determined that the timer count *T1* has reached the specified timer count *T10* at step S109, another decision is subsequently made at step S119 as to whether or not it is the primary fuel injection timing. After waiting until the primary fuel injection timing has come at step S119, the primary fuel injection is implemented at step S 120. Subsequently, a decision is made at step S121 as to whether or not it is expected to perform post-fuel injection. When it is expected to perform post-fuel injection, then, another decision is made at step S122 as to whether or not it has reached the post-fuel injection timing. After waiting until the primary fuel injection timing has come at step S122, the post-fuel injection is implemented at step S123. After implementation of the post-fuel injection at step S123 or when it is not expected to perform post-fuel injection at step S121, the final step orders return for another cycle of the fuel injection control routine.

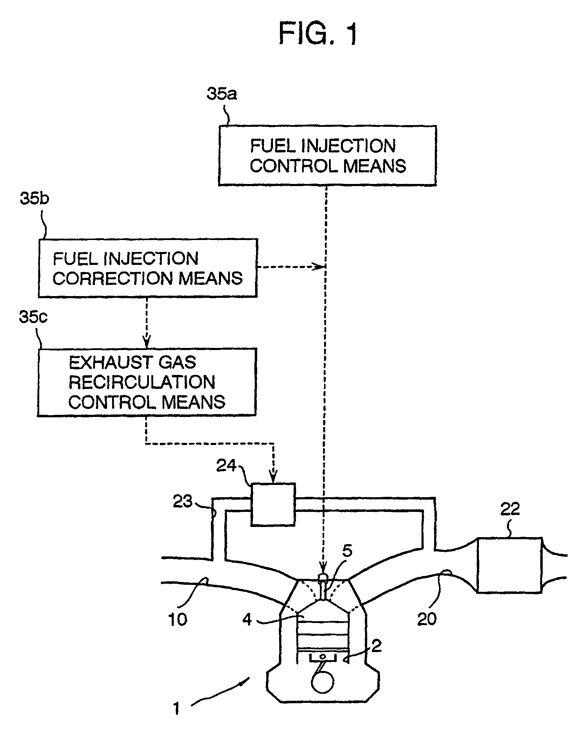

The sequence routine of fuel injection control shown by the flow chart in Figures 6A and 6B, which is programmed for fuel injection control means 35a of the electronic control unit (ECU) 35 (see Figure 1), causes the fuel injector 5 to spray fuel in two parts through the primary fuel injection at a point of time neat a top dead center of a compression stroke and the pre-fuel injection in a period from an intake stroke to a compression stroke or the post-fuel injection at ADTC 15 to 25° CA when an increase in fuel amount is caused. In particular, implementation of the post-fuel injection increases the temperature and pressure of exhaust gas with an effect of rapidly rising a supercharging pressure by the turbocharger 25. Steps S110 and S111 of the sequence routine of fuel injection control form fuel amount correction means 35b (see Figure 1) for providing a quantitative increase of fuel so as to lower the oxygen concentration of exhaust gas for releasing NOx from the catalyst 22. The fuel amount correction means 35b practically carries out the quantitative increase of fuel after the amount of exhaust gas that is admitted into an intake air stream has been increased and the exhaust gas recirculation has become stable.

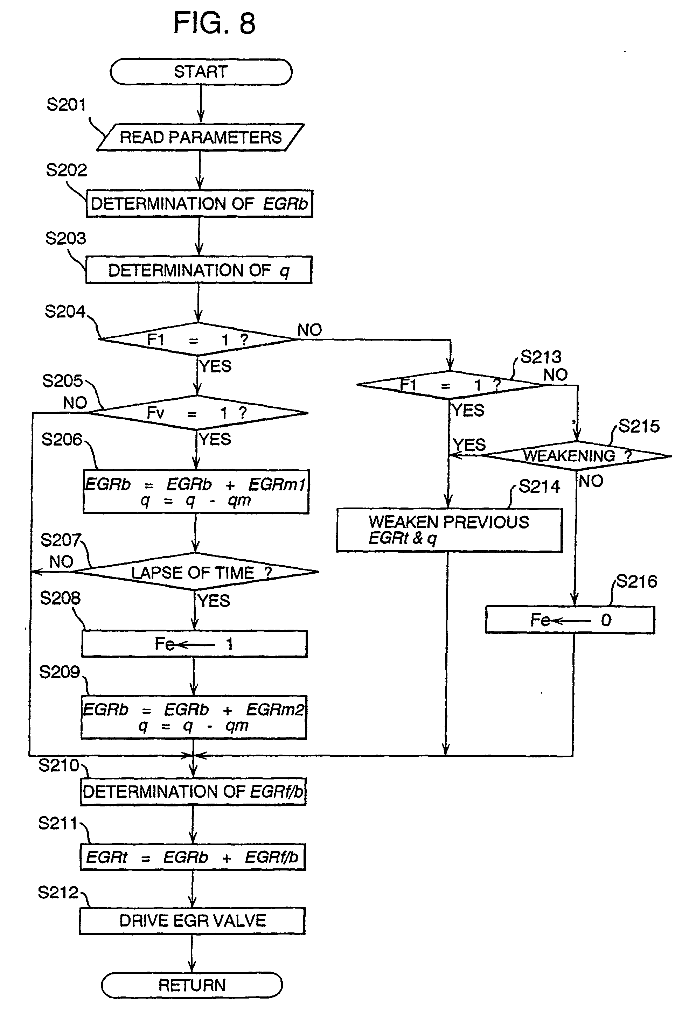

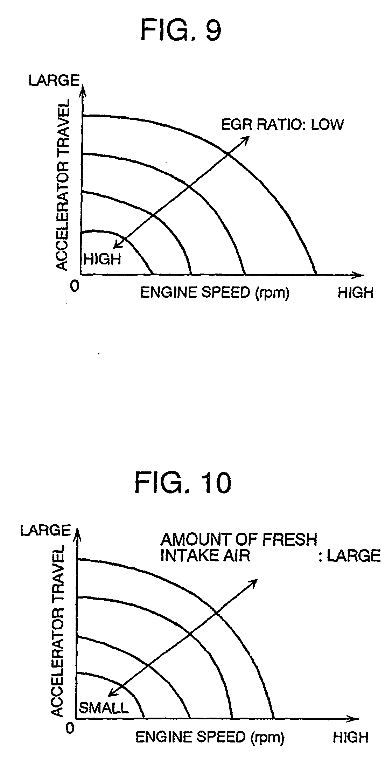

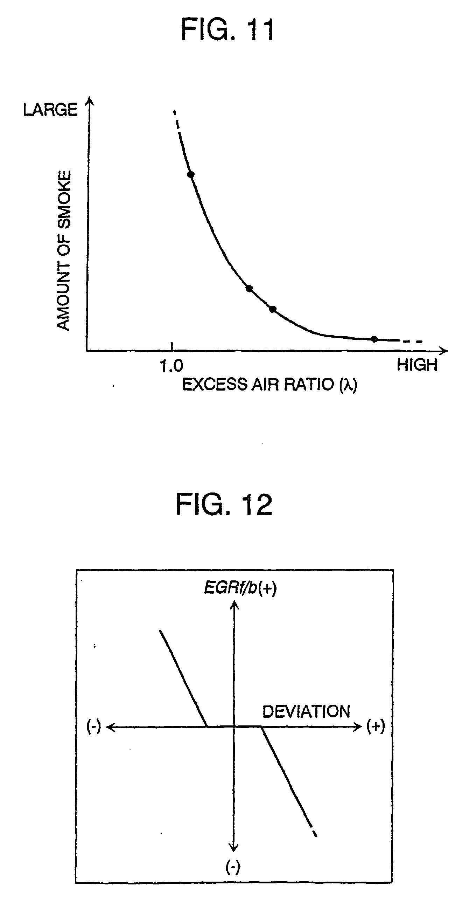

Figure 8 is a flow chart illustrating a sequence routine of exhaust gas recirculation control by the electronic control unit (ECU) 35 which is periodically repeated. When the sequence logic commences, after reading signals representative of various control parameters including at least a crank angle, an air flow rate and an accelerator travel at step S201, a basic exhaust gas recirculation ratio *EGRb* is read from an exhaust gas recirculation control map in accordance with the accelerator pedal travel and an engine speed found from the crank angle at step S202. The exhaust gas recirculation control map, as shown in Figure 9 by way of example, defines appropriate exhaust gas recirculation ratios that have been empirically determined with respect to accelerator pedal travel and engine speed and electronically stored in the memory of the electronic control unit 35. The basic exhaust gas recirculation ratio *EGRb* is defined so as to become basically larger with a decrease in accelerator pedal travel and/or a reduction in engine speed. Subsequently, a target amount of fresh intake air *q* is read from an intake air control map in accordance with the accelerator pedal travel and the engine speed at step S203. The amount of fresh intake air refers to the amount of air introduced into the combustion chamber 4, excluding the amount of exhaust gas recirculation and blow-by gas, and is detected by the air flow sensor 11. The intake air control map, as shown in Figure 10 by way of example, defines appropriate amounts of intake air that have been empirically determined with respect to accelerator pedal travel and engine speed and electronically stored in the memory of the electronic control unit 35. The amount of intake air *q* is defined so as to become larger with an increase in accelerator pedal travel and/or with an increase in engine speed. Also, generally, in a direct injection-spark ignition type of diesel engine, although generation of NOx can be restrained more effectively as the combustion chamber air-to-fuel ratio is changed toward a rich side by increasing the amount of exhaust gas recirculation ratio, however, to the contrary, as shown by way of example in Figure 11, smoke sharply increases in amount when the combustion chamber air-to-fuel ratio becomes too small Therefore, the basic exhaust gas recirculation ratio *EGRb* and the target amount of intake air *q* determined at steps S202 and S203, respectively, are set so as to keep a combustion chamber air-to-fuel ratio as small as possible within a range in which no sharp increase in the amount of smoke occurs.

Subsequently, at step S204, a decision is made as to whether or not the refresh flag F1 that is set during the fuel injection control is up. When the refresh flag F1 is down (F1 = 0), this indicates that it is not within the refreshing period, then, the sequence logic proceeds to another decision at step S213. On the other hand, when the refresh flag F1 is up (F1 = 1), this indicates that it is within the refreshing period, then, the sequence logic proceeds to another decision at step S205 as to whether or not a supercharge flag Fv is set up to a state of "1". The supercharge flag Fv indicates that a supercharging pressure provided by the turbocharger 25 is in a specified region near a target level when being up (Fv = 1). When the supercharge flag Fv is down (Fv=0), this indicates that the supercharging pressure is still lower than the specified region of levels, then the sequence logic proceeds directly to a block at step S210 where a feedback correction value of exhaust gas recirculation ratio *EGRf*/*b* is determined. On the other hand, when the supercharge flag Fv is up (Fv = 1), this indicates that the supercharging pressure is sufficiently high, then, the basic exhaust gas recirculation ratio *EGRb* and the target amount of intake air *q* are corrected so as to cause a shift in average combustion chamber air-to-fuel ratio toward a rich side through steps S206 to S209. Specifically, at step S206, after determining a first correction value of intake air *qm1* by which the target amount of fresh intake air *q* is reduced so that the average combustion chamber air-to-fuel ratio does not enter a specified region for a present amount of fuel injection and a first correction value of exhaust gas recirculation ratio *EGRm1* correspondingly to the first correction value of intake air *qm1*, the first correction value of exhaust gas recirculation ratio *EGRm1* is added to the basic exhaust gas recirculation ratio *EGRb* determined at steps S202 for correction and the first correction value of intake air *qm1* is subtracted from the target amount of fresh intake air *q* determined at step S203 for correction. That is, generally, although the NOx absorbent releases NOx absorbed thereby when the oxygen concentration of exhaust gas is lower than 2% and is, however, hard to reduce sufficiently the released NOx until the oxygen concentration of exhaust gas becomes further lower than, for example, 1%, so as to allow temporarily a high level emission of NOx into the atmosphere as shown in Figure 11. For this reason, the exhaust gas recirculation control is intended to prevent a high level emission of NOx into the atmosphere by controlling an average combustion chamber air-to-fuel ratio to remain out of the specified region, in other words, by controlling an oxygen concentration of exhaust gas to remain less than 2%, when reducing the amount of fresh intake air by increasing an exhaust gas recirculation ratio *EGR.* That is, the exhaust gas recirculation ratio *EGR* is controlled to reach such a specific value that an oxygen concentration of exhaust gas of approximately 2% is reached.

Subsequently, a decision is made at step S207 as to whether or not a specified time has lapsed since the decision of the supercharge flag Fv that is up at step S205. When the specified time has not lapsed, this indicates that a time lapse from opening the exhaust gas recirculation valve 24 at step S212 which will be described later is still short, i.e. that the exhaust gas recirculation valve 24 is still under operation, or that a stream of recirculated exhaust gas is still unstable in the combustion chamber 4 even though the opening of exhaust gas recirculation valve 24 has been completed, then, the sequence logic proceeds to step S210. On the other hand, when the specified time has not lapsed, this indicates that the opening of exhaust gas recirculation valve 24 has been completed and the stream of recirculated exhaust gas is stable in the combustion chamber 4, then, the EGR flag Fe is set up (Fe = 1) at step S208. In this instance, in consideration of an operationral delay of the exhaust gas recirculation valve 24 and a delay of an exhaust gas that is recirculated, the EGR flag Fe is reset down to restrict implementation of injection of the corrected amount of fuel during operation of the EGR valve 25 and in an unstable period in which the stream of recirculated exhaust gas overshoots in the combustion chamber 4. The time lapse of which a decision is made at step S207 may be made from the decision of the refresh flag F1 that is up at step S204 or on the based on a valve lift of the exhaust gas recirculation valve 24 which is represented by a signal from the lift sensor 26. Otherwise, in place of the decision as to the time lapse, it may be acceptable to detect attainment of a target average combustion chamber air-to-fuel ratio which can be ound on the basis of a signal from the linear O₂ sensor 17.

Thereafter, at step S209, the basic exhaust gas recirculation ratio *EGRb* and the target amount of intake air *q* both of which are corrected at step S206 are further corrected so as to change the average combustion chamber air-to-fuel ratio to a value near the stoichiometric air-to-fuel ratio on the rich side. In the same manner as taken at step S206, after determining a second correction value of intake air *qm2* by which the target amount of fresh intake air *q* is reduced and a second correction value of exhaust gas recirculation ratio *EGRm2* correspondingly to the second correction value of intake air *qm1* in the same manner as taken at step S206, a basic exhaust gas recirculation ratio *EGRb* and a target amount of fresh intake air *q* are determined. In this instance, the basic exhaust gas recirculation ratio *EGRb* after correction may be further corrected so as to prevent an occurrence of flame off due to an excess of exhaust gas recirculation.

Subsequent to the correction of the basic exhaust gas recirculation ratio *EGRb* and the target amount of air *q*, at step S210, a feedback correction value of exhaust gas recirculation ratio *EGRf*/*b* that is used in exhaust gas recirculation feedback control is determined from an exhaust gas recirculation control map such as shown in Figure 12 by way of example in accordance with a deviation of the amount of fresh intake air detected by the air flow censor 11 from the corrected target amount of intake air *q* at step S209. The exhaust gas recirculation control map defines exhaust gas recirculation ratio correction values *EGRf*/*b* that have been empirically determined with respect to deviations between the amount of fresh intake air and the target amount of intake air and electronically stored in the memory of the electronic control unit 35. The exhaust gas recirculation ratio correction value *EGRf*/*b* is defined so as to become smaller with an increase in deviation between the amount of fresh intake air and the target amount of intake air when the amount of fresh intake air is larger than the target amount of intake air or to become larger with an increase in deviation between the amount of fresh intake air and the target amount of intake air when the amount of fresh intake air is smaller than the target amount of intake air. However, there is provided a dead zone at a section where the target amount of intake air is close to the actual amount of fresh intake air. At step S211, a target exhaust gas recirculation ratio *EGRt* is determined by adding the exhaust gas recirculation ratio correction value *EGRf*/*b* to the basic exhaust gas recirculation ratio *EGRb*. Subsequently, a control signal is output to actuate the electromagnetic valve 28 so as to control the negative pressure, thereby driving the exhaust gas recirculation valve 24 according to the target exhaust gas recirculation ratio *EGRt* at step S212. Then, the final step orders return for another implementation of the exhaust gas recirculation control routine. In the exhaust gas recirculation control, the feedback control through steps S210 and S211 may be not always canied out.

In short, in the exhaust gas recirculation control, when refreshing the catalyst 22, the exhaust gas recirculation ratio is first increased to a value sufficiently high to lower the oxygen concentration of exhaust gas to approximately 2% by reducing the amount of fresh intake air. At this time, increasing the amount of fuel is suspended until overshooting of the exhaust gas recirculation valve 24 calms down with the result of bringing the stream of recirculated exhaust gas into the combustion chamber 4 into a stable state. When the exhaust gas recirculation valve 24 completes operation and becomes stable, the EGR flag is set up (Fe = 1) to increase correctly the amount of fuel and the exhaust gas recirculation valve 24 is driven to open so as to cause an increase in exhaust gas recirculation ratio, thereby changing the average combustion chamber air-to-fuel ratio to a value near or on the richer side from the stoichiometric air-to-fuel ratio with the result of lowering the oxygen concentration of exhaust gas sufficiently to promote effective refreshment of the catalyst 22. In other words, the amount of fresh intake air is reduced by increasing the exhaust gas recirculation ratio and, after achieving stabilization of a change in the amount of fresh intake air, the amount of fuel is increased correspndingly to the reduced amount of fresh intake air, as a result of which, even though a delay in response to the exhaust gas recirculation control is relatively large, it is avoided to receive an adverse effect from the response delay, so as to prevent an occurrence of an increase of smoke and torque shock Further, combustion is appropriately slowed by the exhaust gas recirculated into the combustion chamber 4 with an effect of lowering the emission level of NOx, and the temperature of intake air is risen by the exhaust gas recirculated into the combustion chamber 4 with an effect of promoting atomization and evaporation of fuel, so as to restrain generation of smoke.

On the other hand, when the refresh flag F1 is up (F = 1) at step S204, this indicates that it is out of the refreshing period, then, a decision is further made at step S213 as to whether or not the refresh flag F1 was up in the previous control cycle. When the answer to the decision is affirmative, at step S214, the basic exhaust gas recirculation ratio *EGRb* and the target amount of intake air *q* that have been corrected during the previous cycle of exhaust gas recirculation control sequence are weighted in a specified relationship according to the basic exhaust gas recirculation ratio *EGRb* and the target amount of intake air *q* that are determined at steps S202 and S203, respectively, in the instant cycle. On the other hand, when the answer to the decision is negative at step S213, another decision is subsequently made at step S215 as to whether or not it is still under a weighting process. In the case where the basic exhaust gas recirculation ratio *EGRb* and the target amount of intake air *q* after correction in the previous cycle are different from those determined in the instant cycle, an affirmative answer is given, then, the basic exhaust gas recirculation ratio *EGRb* and the target amount of intake air *q* after correction in the previous cycle are weighted in the specified relationship according to the basic exhaust gas recirculation ratio *EGRb* and the target amount of intake air *q* determined in the instant cycle at step S214. On the other hand, when the answer is negative, this indicates that the basic exhaust gas recirculation ratio *EGRb* and the target amount of intake air *q* after correction in the previous cycle are approximately equal to those determined in the instant cycle, then, the EGR flag Fe is reset down (Fe = 0) at step S216. After weighting the basic exhaust gas recirculation ratio *EGRb* and the target amount of intake air *q* corrected in the previous cycle at step S214 or resetting down the EGR flag Fe (Fe = 0) at step S216, After weighting basic exhaust gas recirculation ratio *EGRb* and the target amount of intake air *q* at step S214 or resetting down the EGR flag Fe (FE = 0) at steep S216, the sequence logic proceeds to the block at step S210 where a feedback correction value of exhaust gas recirculation ratio *EGRf*/*b* is determined. A target exhaust gas recirculation ratio *EGRt* is determined by adding the exhaust gas recirculation ratio correction value *EGRf*/*b* to the basic exhaust gas recirculation ratio *EGRb* at step S211 and, subsequently, a control signal is output to actuate the electromagnetic valve 28 so as to control the negative pressure, thereby driving the exhaust gas recirculation valve 24 according to the target exhaust gas recirculation ratio *EGRt* at step S212. The final step orders return for another implementation of the fuel injection control routine. That is to say, when restoring the engine to an ordinary operation state after refreshing the catalyst 22, the exhaust gas recirculation is restored to the basic state by gradually reducing the exhaust gas recirculation ratio is gradually lowered and gradually increasing the amount of intake air.

Steps S204 to S212 of the sequence routine of exhaust gas recirculation control form exhaust gas recirculation control means 35c (see Figure 1) for causing the exhaust gas recirculation valve 24 to operate so as to rise the exhaust gas recirculation ratio before a corrective increase in amount of fuel injection is made when refreshing the catalyst 22. The exhaust gas recirculation control means 35c starts the exhaust gas recirculation valve 24 to open after rising supercharging pressure by the turbocharger 25 so high as to increase the amount of supercharging air greater than a specified value (at step S205).

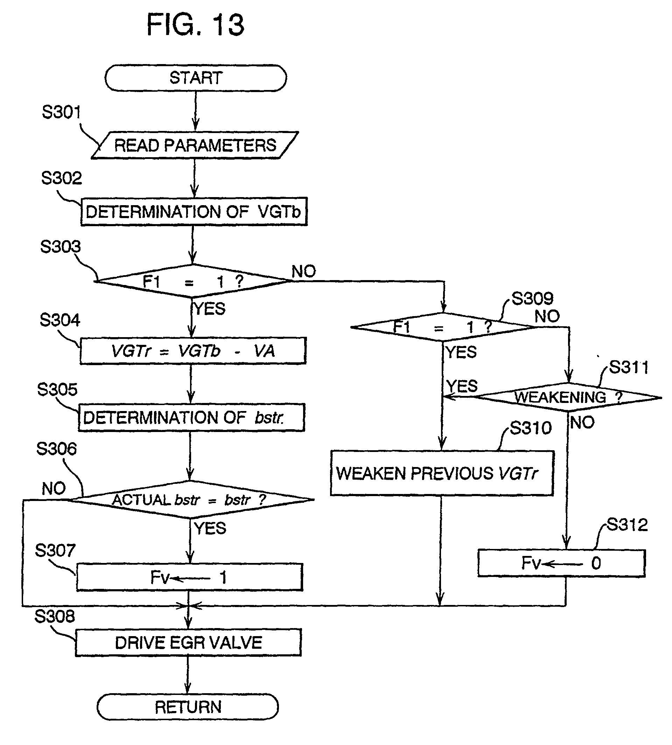

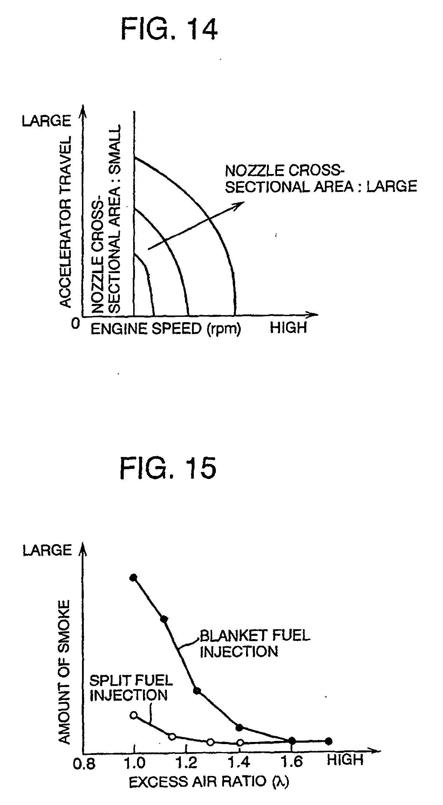

Figure 13 is a flow chart illustrating a sequence routine of variable geometric turbocharger control which is periodically repeated. When the sequence logic commences, after reading signals representative of various control parameters including at least a crank angle, a supercharging pressure, the amount of fresh intake air and an accelerator pedal travel at step S301, a basic nozzle cross-sectional area *VGTb* is read from a variable geometric turbocharger control map in accordance with engine operation conditions, namely, the accelerator pedal travel and an engine speed found from the crank angle, at step S302. The variable geometric turbocharger control map, as shown in Figure 14 by way of example, defines basic nozzle cross-sectional area *VGTb* in accordance with engine operation conditions that are empirically determined and electronically stored in the memory of the electronic control unit 35. The basic nozzle cross-sectional area *VGTb* is defined so as to become larger with an increase in accelerator pedal travel and/or an increase in engine speed. This realizes smooth supercharging without causing a rise in exhaust gas resistance in a region of higher engine speed and rising the pressure of exhaust gas directed to the turbine 21 even in a region of lower engine speed with an effect of rapidly rising the supercharging pressure.

Subsequently, a decision is made at step S303 as to whether or not the refresh flag F1 is up (F1 = 1). When the refresh flag remains up (F1 = 1), this indicates that it is within the refreshing period, then a target nozzle cross-sectional area *VGTr* is determined by subtracting a correction value *VA* from the basic nozzle cross-sectional area *VGTb* at this step S304, and a target supercharging pressure *bstr* is subsequently determined correspondingly to the target nozzle cross-sectional area *VGTr* at step S305. Thereafter, a decision is made at step S306 as to whether or not the supercharging pressure *bst* is in a specified extent including the target supercharging pressure *bstr*. When the answer to the decision is affirmative, i.e. the actual supercharging pressure *bst* is nearly equal to the target supercharging pressure *bstr*, this indicates that the combustion chamber 4 is charge with a sufficiently increased amount of intake air as a result of a rise in supercharging pressure by the turbocharger 25, then, after setting up the supercharge flag Fv (Fv = 1) at step S307, a control signal corresponding to the target intake throttle valve lift *TVt* is output to the electromagnetic valve 31 to drive the variable vanes 21b of the turbine 21 until attaining the target nozzle cross-sectional area *VGTr* at step S308. On the other hand, when the answer to the decision made at step S306 is negative, this indicates that the actual supercharging pressure *bst* is out of the specified extent of supercharging pressure, then, a control signal corresponding to the target intake throttle valve lift *TVt* is output to the electromagnetic valve 31 to drive the variable vanes 21b of the turbine 21 until attaining the target nozzle cross-sectional area *VGTr* at step S308 without setting up the supercharge flag Fv.

On the other hand, when the refresh flag F1 remains reset down (F1 = 0) at step S303, this indicates that it is out of the refreshing period, then, another decision is subsequently made at step S309 as to whether or not the refresh flag F1 was up in the previous cycle of the variable geometric turbocharger control routine. When the answer to the decision is affirmative, the target nozzle cross-sectional area *VGTr* that is corrected in the previous cycle is weighted according to the target nozzle cross-sectional area *VGTr* determined in the instant cycle at step S310.On the other hand, when the answer to the decision is negative, another decision is subsequently made at step S311 as to whether or not it is still under a weighting process, in other words, whether or not the target nozzle cross-sectional area *VGTr* that is corrected in the previous cycle is greatly different from the target nozzle cross-sectional area *VGTr* determined in the instant cycle. When the answer to the decision is affirmative, the weighting process is continued at step S310. On the other hand, when the answer to then decision is negative, this indicates that the target nozzle cross-sectional area *VGTr* that is corrected in the previous cycle is approximately equal to the target nozzle cross-sectional area *VGTr* determined in the instant cycle, then,the supercharge flag Fv is reset down (Fv = 0). After completion of the weighting process at step S310 or after resetting down the supercharge flag Fv (Fv = 0) at step S312, a control signal corresponding to the target intake throttle valve lift *TVt* is output to the electromagnetic valve 31 to drive the variable vanes 21b of the turbine 21 until attaining the target nozzle cross-sectional area *VGTr* at step S308.

That is, the turbocharger 25 is controlled to make the nozzle cross-sectional area (A) smaller while it is within the refreshing period (the refresh flag F1 remains up) than when it is out of the refreshing period so as to rise the pressure of exhaust gas into the turbine 21, thereby rising sharply the supercharging pressure *bst*. As a result, both temperature and pressure of intake air are risen due to an increased amount of intake air that is supercharged into the combustion chamber 4, which is accompanied by significant improvement of atomization and evaporation of fuel and mixing of fuel and air, so as thereby to restrain generation of smoke that accompanies combustion of an air-fuel mixture. In this instance, because the exhaust gas recirculation ratio ha been risen through the exhaust gas recirculation control, the amount of fresh intake air that is introduced into the combustion chamber 4 is reduced. Further, the engine 1 is restored to an ordinary operation state after completion of refreshment of the catalyst 22, the turbocharger 25 is controlled to cause a gradual reduction in nozzle cross-sectional area (A) so as to restore an ordinary supercharging state.

Steps S303 through S308 of the sequence routine of variable geometric turbocharger control form supercharging control means 35d (see Figure 1) for providing a rapid rise in supercharging pressure of the turbocharger 25 so as to increase the amount of supercharging air into the combustion chamber 4 when refreshing the catalyst 22. The supercharging control means 35d operates to drive the variable vanes 21b of the turbine 21 so as to rise the pressure of exhaust gas that is admitted to the turbine 21 of the turbocharger 25.

In the operation and effect of the diesel engine control system as described above, the fuel injection control means 35a controls the fuel injector 5 to spray a basic amount of fuel *Qbase* all at once at an end of a compression stroke of each cylinder 2 as shown in Figure 5A during ordinary engine operation, so that an air-fuel mixture is burnt with a combustion chamber air-to-fuel ratio on a lean side, and the catalyst 22 absorbs NOx produced accompanying the combustion. When there occurs apprehensions for aggravation of NOx absorbing capacity due to a rise in level of NOx absorption of the catalyst 22, the supercharging control means 35d controls the turbocharger 25 to throttle down the nozzles so as to rise the supercharging pressure, thereby increasing the amount of intake air that is supercharged into the combustion chamber 4. Subsequently, the exhaust gas recirculation control means 35c controls the exhaust gas recirculation valve 24 to open more so as to rise the exhaust gas recirculation ratio in the combustion chamber 4 and, at the same time, the fuel amount correction means 35b performs a corrective increase in amount of fuel injection so as to bring a combustion chamber air-to-fuel ratio to a value near the stoichiometric air-to-fuel ratio. As a result; the oxygen concentration of exhaust gas is lowered, so that the catalyst 22 releases NOx (refreshment of the catalyst 22) and reduces and purifies the exhaust gas. At this time, through control of the fuel injector 5 by the fuel injection control means 35a, the secondary fuel injection is implemented separately from the primary fuel injection. That is, when the engine 1 operates in the region of higher engine loads, the pre-fuel injection is made in either an intake stroke or a compression stroke as shown in Figure 5B. The fuel sprayed through the pre-fuel injection is sufficiently mixed with air before the primary fuel injection is made, so as to burn satisfactorily owing to ignition of fuel vapors that are sprayed through the primary fuel injection. On the other hand, when the engine 1 operates in the region of lower engine loads, the post-fuel injection is made after completion of the primary fuel injection (ATDC 15 ° to 25° CA) as shown in Figure 5C.
The fuel sprayed through the post-fuel injection spreads in the combustion chamber 4 under considerably high temperature and pressure, so as to atomize and evaporate rapidly, thereby buring completely. That is, in this embodiment; the catalyst 22 is refreshed by implementing the secondary fuel injection separately from the primary fuel injection so as to bring the combustion chamber air-to-fuel ratio to a value near the stoichiometric air-to-fuel ratio without causing a sharp increase of smoke. In particular, when the post-fuel injection is made for the secondary fuel injection, the catalyst 22 is refreshed more promptly due to a rise in concentration of reduction components, such s HC and CO, of exhaust gas.

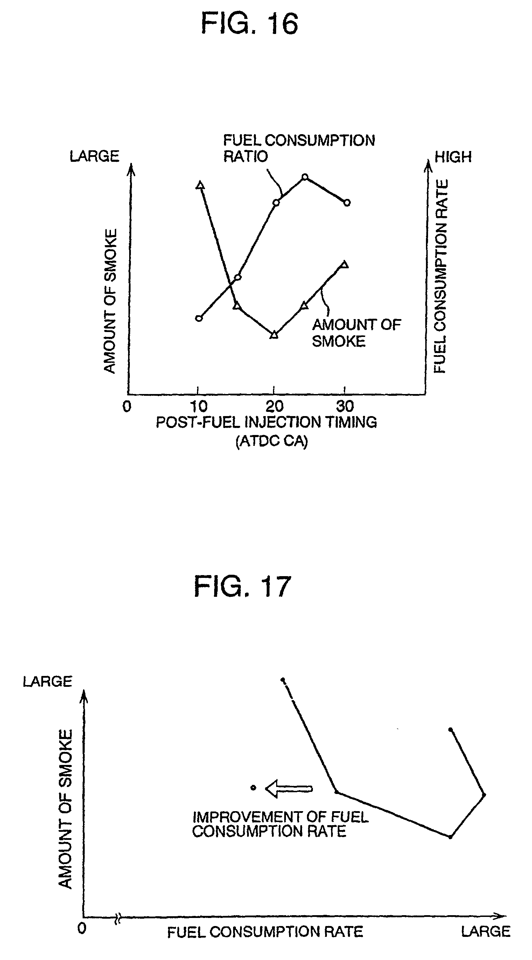

Figure 15 is a diagram showing an experimental result of generation of smoke relative to excess air ratio between split fuel injection involving primary fuel injection and post-fuel injection, and blanket fuel injection through primary fuel injection. The experimental result was the data from a four-cylinder diesel engine of 2,000 cc in displacement that was operated at 1,500 rpm in the region of lower engine loads. Further, the total amount of fuel to be sprayed was divided into two equal parts for the primary fuel injection and the post-fuel injection made at timings fixed to BTDC 5° CA and ATDC 20° CA, respectively. As apparent from Figure 16, it is revealed that; in connection with the blanket fuel injection, the amount of smoke is significantly low when an average excess air ratio (λ) in the combustion chamber 4 (which is hereafter referred to as an average combustion chamber excess air ratio)) is greater than 1.6 and, however, increases sharply as the average combustion chamber excess air ratio (λ) gradually lowers when it is less than 1.6. When an average combustion chamber excess air ratio (λ) is one (1), i.e. when the stoichiometric air-to-fuel ratio is provided in the combustion chamber 4, the amount of smoke is approximately 20 times as large as that when an average combustion chamber excess air ratio (λ) is greater than 1.6, which is too large. To the contrary, in the case where the post-fuel injection is made, the amount of smoke generating at an average combustion chamber excess air ratio (λ) of 1.2 or between 1.2 and 1.6 is almost the same as that at an average combustion chamber excess air ratio (λ) greater than 1.6, and it can be said that the amount of smoke is sufficiently small even at an average combustion chamber excess air ratios (λ) of one (1). In particular, at an average combustion chamber excess air ratio (λ) of one (1), the amount of smoke generating that is generated from implementation of the post-fuel injection together with the primary fuel injection is less than a quarter of that from implementation of the blanket fuel injection, which proves a remarkable restriction of generation of smoke.

Figure 16 shows an experimental result of a test of generation of smoke and fuel consumption relative to post-fuel injection timing. The empirical result was the data from a four-cylinder diesel engine of 2,000 cc in displacement that was operated with a specified low engine load at 1,500 rpm. Further, while the total amount of fuel was determined so as to cause an air-to-fuel ratio to converge around the stoichiometric air-to-fuel ratio, it was divided into two equal parts for the primary fuel injection and the post-fuel injection made at timings fixed to BTDC 5° CA and ATDC from 10° to 30° CA, respectively. As clearly understood from Figure 16, the amount of smoke shows a drastic reduction when the post-injection is carried out in the crank angle range of ATDC 15° to ATDC 25° CA. However, in this crank angle range, the fuel consumption rate aggravates more as the post-fuel injection timing is retarded. Accordingly, it is revealed that, although depending upon engine types, the post-fuel injection timing is preferred to be between ATDC 15° CA to ATDC 25° CA, and more preferably between ATDC 15° CA to ATDC 20° CA.

In this embodiment, because, when refreshing the catalyst 22, the amount of intake air supercharged into the combustion chamber 4 is increased by rising the supercharging pressure of intake air is risen by the turbocharger 25, the temperature and pressure of intake air in the combustion chamber 4 is risen with the effect of promoting atomization and evaporation of fuel, so as to improve combustion of the fuel, thereby restraining an increase in the amount of smoke and improving fuel consumption rate.

Figure 17 shows an experimental result of a combustion test for demonstrating the relationship between fuel generation and fuel consumption rate. The starting point of time at which the post-fuel injection commences is indicated by points a, b, c and d which correspond to ATDC 15° CA, ATDC 20° CA, ATDC 25° CA and ATDC 30° CA, respectively. It is proved that it is desirable to start the primary fuel injection and the post-fuel injection at ATDC 5° CA and ATDC 15° CA, respectively, in terms of attaining both small amount of smoke and low fuel consumption rate as shown in Figure 16. Moreover, as shown by a point e in Figure 17, the fuel consumption rate is significantly improved without rising the amount of smoke by an increase in the amount of charging air which is cause by a rise in supercharging pressure by the turbocharger 25.

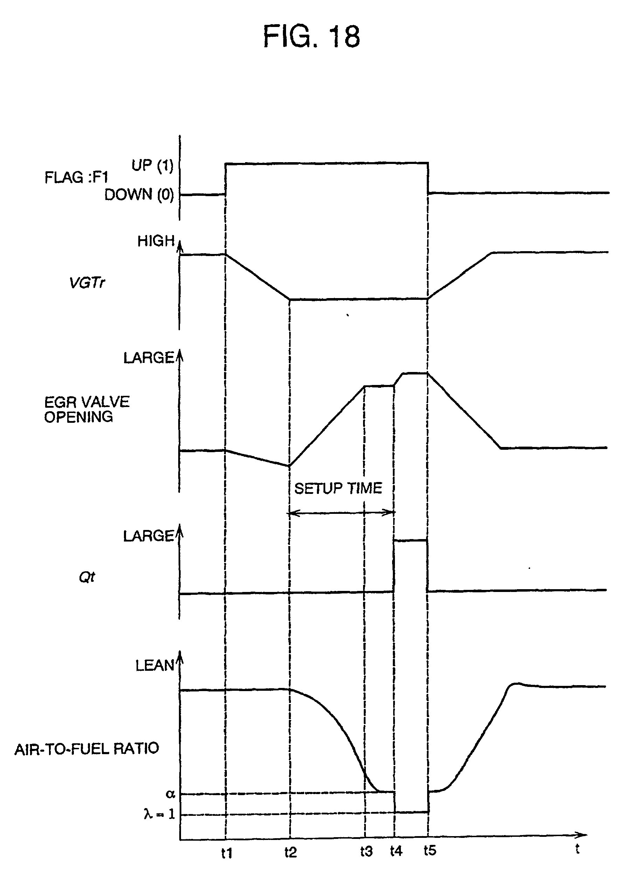

Figure 18 is a time chart showing changes in VGT nozzle cross-sectional area, EGR valve opening, the amount of fuel infection and actual combustion chamber air-to-fuel ratio. In the above embodiment, when refreshing the catalyst 22, the fuel amount correction control, the exhaust gas recirculation control and the variable geometric turbocharger control are separately implemented in a specified order. As shown in Figure 18, when the refresh flag F1 is set up (F1 = 1) at a point of time t1 as a result of a rise in the level of NOx absorption of the catalyst 22 during engine operation, the supercharging control means 35d causes the turbocharger 25 to correctly narrow a target nozzle cross-sectional area *VGTr*. As a result, the variable vanes 21b of the turbine 21 are driven to increase the supercharging pressure according to the target nozzle cross-sectional area *VGTr* after correction, so as to narrow the nozzle cross-sectional area between the points of time t1 and t2. In consequence, the exhaust pressure on the upstream side of the turbocharger 25 rises, which is accompanied by an increase in exhaust gas recirculation ratio as a matter of course, so that the EGR valve 24 decreases its opening gradually so as to keep the average combustion chamber air-to-fuel ratio. When the amount of charging air increases sufficiently as a result of a rise in supercharging pressure at the point of time t2, then, the supercharge flag Fv is set up (Fv = 1), the exhaust gas recirculation control means 35c causes the exhaust gas recirculation valve 24 to increase its opening so as to change the average combustion chamber air-to-fuel ratio toward the rich side between points of time t2 and t3. Actually, since the amount of exhaust gas recirculation increases with a delay from operation of the exhaust gas recirculation valve 24, the average combustion chamber air-to-fuel ratio changes gradually to the rich side. The exhaust gas recirculation valve 24 stops operation at the point of time t3 before the average combustion chamber air-to-fuel ratio reaches a value α that provides exhaust gas with an oxygen concentration less than approximately 2%. When a fluctuation of the average combustion chamber air-to-fuel ratio that occurs due to overshooting of the exhaust gas recirculation valve 24 disappears at a point of time t4, the supercharge flag Fv is reset down (Fv = 0). At this time, the fuel amount correction means 35b increases the amount of fuel *Qt* for correction and the exhaust gas recirculation control means 35c causes the exhaust gas recirculation valve 24 to open more. As a result, the average combustion chamber air-to-fuel ratio becomes to a value near or on the rich side from the stoichiometric air-to-fuel ratio, so as to provide the exhaust gas with an oxygen concentration sufficiently lower to refresh the catalyst 22. Immediately after the oxygen 22 releases NOx sufficiently between points of time t4 and t5, while the fuel amount correction control is terminated, the exhaust gas recirculation valve 24 is gradually closed and the turbocharger 25 drives the variable vanes 21b so as to widen the nozzle cross-sectional area, thereby restoring the engine 1 to an ordinary operation state.

As described above, because operation control of the exhaust gas recirculation valve 24 and the turbocharger 25 which have relatively large response delays are implemented beforehand, and, subsequently, the fuel amount correction control is implemented immediately after attainment of stabilization of both amount of charging air and exhaust gas recirculation ratio, the average combustion chamber air-to-fuel ratio is changed as aimed at and, accordingly, it is prevented to cause emission levels of NOx and smoke due to fluctuations in air-to-fuel ratio even when an average combustion chamber air-to-fuel ratio is changed to a value near the stoichiometric air-to-fuel ratio on the rich side. Further, because the fuel amount correction control, the control of the exhaust gas recirculation valve and the control of variable vanes 21b of the turbocharger 25 are governed separately from one another, the three controls which effect combustion conditions of the engine 1 evade interference with one another, which is always desirable to simplify control sequence.In particular, because, if the post-fuel injection is made together with implementation of the fuel amount correction control when there occurs temporarily an excess of exhaust gas recirculation due to overshooting of the exhaust gas recirculation valve 24, there is apprehension of a sharp increase of smoke due to excessive enrichment of a fuel mixture which results from that fuel that is partly unburned is recirculated into the intake line together with exhaust gas, it is significantly effective to increase the amount of fuel injection after the stabilization of exhaust gas recirculation ratio as described above.

Furthermore, in the above embodiment, the oxygen concentration of exhaust gas is gradually lowered by controlling the exhaust gas recirculation valve 24 and, when reaching approximately 2%, it is forced to slump to 0%. That is, as shown as an example in Figure1 9, the catalyst 22 is characterized by rising an emission level of NOx into the atomsphere temporarily because, although it releases NOx when the oxygen concentration of exhaust gas is declined below approximately 2%, it is difficult to reduce the NOx released from the catalyst 22 until the oxygen concentration of exhaust gas is further declined, i.e. as long as an excess air ratio (λ) remains smaller than one (1). As against, as described above, because the oxygen concentration of exhaust gas is first lowered to approximately 2% by controlling the exhaust gas recirculation valve 24 and thereafter forced to slump to 0% by increasing the amount of fuel injection, NOx is prevented from emitting into the atmosphere as they are released from the catalyst 22.

Figures 20A and 20B are respective parts of another sequence routine of exhaust gas recirculation control by the electronic control unit (ECU) 35 in which a target exhaust gas recirculation ratio is gradually increased when releasing NOx from the catalyst 22 and is gradually decreased after NOx release from the catalyst 22 and which is periodically repeated. When the sequence logic commences, after reading signals representative of various control parameters including at least a crank angle, an air flow rate and an accelerator travel at step S401, a basic exhaust gas recirculation ratio *EGRb* is read as target exhaust gas recirculation ratio from an exhaust gas recirculation control map, such as shown in Figure 9 by way of example, in accordance with the accelerator pedal travel and an engine speed found from the crank angle at step S402. An actual exhaust gas recirculation ratio *EGRo* is determined on the basis of an intake air flow rate and an amount of intake air which is defined by an engine speed and a capacity of the cylinder at step S403. Subsequently, at step S404, a decision is made as to whether or not or not the refresh flag is up (F1=1). When the refresh flag F1 is down (F1=0), the sequence logic proceeds to step S416. On the other hand, when the refresh flag F1 remains up (F1 = 1), this indicates that it is within the refreshing period, then, the sequence logic proceeds to another decision at step S405 as to whether or not a supercharge flag Fv is up (Fv=1). When the supercharge flag Fv is down (Fv=0), this indicates that the supercharging pressure is still not sufficiently high, then, after resetting a correction value of exhaust gas recirculation ratio *EGRx*, by which target exhaust gas recirculation ratio is gradually increased or decreased, to zero (0) at step S406, the sequence logic proceeds to a block at step S411 where the basic exhaust gas recirculation ratio *EGRb* is corrected by an addition of the correction value of exhaust gas recirculation ratio *EGRx*. On the other hand, when the supercharge flag Fv is up (Fv = 1), this indicates that the supercharging pressure is sufficiently high, then, another decision is subsequently made at step S407 as to whether or not an exhaust gas recirculation (EGR) flag Fe is up (Fe = 1). When the EGR flag Fe is down (Fe = 0), the correction value of exhaust gas recirculation ratio *EGRx* is changed by adding a specified value *EGRdl* thereto in order to cause a gradual increase of the basic exhaust gas recirculation ratio *EGRb* at step S408. Subsequently, a decision is made at step S409 as to whether or not the resultant basic exhaust gas recirculation ratio *EGRb* that is the basic exhaust gas recirculation ratio *EGRb* added by the increased correction value of exhaust gas recirculation ratio *EGRx* has reached a specified exhaust gas recirculation ratio *EGRm* which is predetermined as a criteria suitable for implementation of the fuel amount correction control. When the resultant basic exhaust gas recirculation ratio *EGRb* (*EGRb* + *EGRx*) is greater than the specified exhaust gas recirculation ratio *EGRm*, after setting up the EGR flag Fe (Fe = 1) at step S410, the sequence logic proceeds to step S411. On the other hand, when the supercharge flag Fv is up (Fv = 1) at step S407, the sequence logic proceeds directly to step S411 without changing the correction value of exhaust gas recirculation ratio *EGRx*.

At step S411, the basic exhaust gas recirculation ratio *EGRb* is added by the increased correction value of exhaust gas recirculation ratio *EGRx*, and, at step S412, a deviation *ΔEGR* of the actual exhaust gas recirculation ratio *EGRo* from the instant basic exhaust gas recirculation ratio *EGRb* is calculated. Subsequently, after calculating a feedback correction value *EGRf*/*b* for a PID control including proportional, integral and differential actions at step S413, a target exhaust gas recirculation ratio *EGRt* is determined by adding the feedback correction value of exhaust gas recirculation ratio *EGRf*/*b* to the instant basic exhaust gas recirculation ratio *EGRb* at step S414. Finally, a drive signal is output correspondingly to the target exhaust gas recirculation ratio *EGRt* to drive the exhaust gas recirculation valve 24 at step S415. Then, the final step orders return for another implementation of the exhaust gas recirculation control routine. In this instance, until a basic exhaust gas recirculation ratio *EGRb* reaches the specified exhaust gas recirculation ratio *EGRm*, the correction value of exhaust gas recirculation ratio *EGRx* is gradually increased and a basic exhaust gas recirculation ratio *EGRb* as a target is correspondingly gradually increased.

On the other band, when the fuel amount correction control is terminated, the refresh flag F1 is reset down, so that the answer to the decision made at step S404 turns negative. As a result, the sequence logic proceeds to step S416 where a decision is made as to whether or not the refresh flag F1 was up (F1 = 1) in the previous cycle. When the refresh flag F1 was up (F1 = 1) in the previous cycle, after setting up an exhaust gas recirculation (EGR) ratio decrease flag F2 (F2 = 1), the correction value of exhaust gas recirculation ratio *EGRx* is changed by subtracting the specified value *EGRd1* therefrom in order to cause a gradual decrease of the basic exhaust gas recirculation ratio *EGRb* at step S418. The EGR ratio decrease flag F2 indicates that it is a period for decreasing gradually down an exhaust gas recirculation ratio when it is up. On the other hand, when the refresh flag F1 was down (F1 = 0) in the previous cycle, another decision is made at step S419 as to whether or not the EGR ratio decrease flag F2 is up (F2 = 1).

After setting up the EGR mtio decrease flag F2 (F2 = 1) at step S417 or when the EGR ratio decrease flag F2 is up (F2 = 1) at step S419, the correction value of exhaust gas recirculation ratio *EGRx* that has been increased at step S408 is changed by subtracting a specified value *EGRd2* therefrom at step in order to cause a gradual decrease of the basic exhaust gas recirculation ratio *EGRb* at step S418. In this instance, the specified value *EGRd2* is predetermined to be greater than the specified value *EGRd1*. Subsequently, a decision is made at step S420 as to whether or not the correction value of exhaust gas recirculation ratio *EGRx* is changed lower than zero (0). When the correction value of exhaust gas recirculalion ratio *EGRx* is lower than zero (0), after setting correction value of exhaust gas recirculation ratio *EGRx* to zero (0) at step S421, the EGR ratio decrease flag F2 (F2 = 1) is reset down (F2 = 0) at step S422. When the EGR ratio decrease flag F2 is down (F2 = 0) at step S419, when the correction value of exhaust gas recirculation ratio *EGRx* is still higher than zero (0) at step S420, or after resetting down the EGR ratio decrease flag F2 (F2 = 1) is reset down (F2 = 0) at step S422, the EGR flag Fe is reset down (Fe = 0) at step S423. Subsequently, the sequence logic proceeds to steps S411 through S415. As described above, when the fuel amount correction control is terminated, the correction value of exhaust gas recirculation ratio *EGRx*, is gradually decreased and a basic exhaust gas recirculation ratio *EGRb* as a target is correspondingly gradually increased.

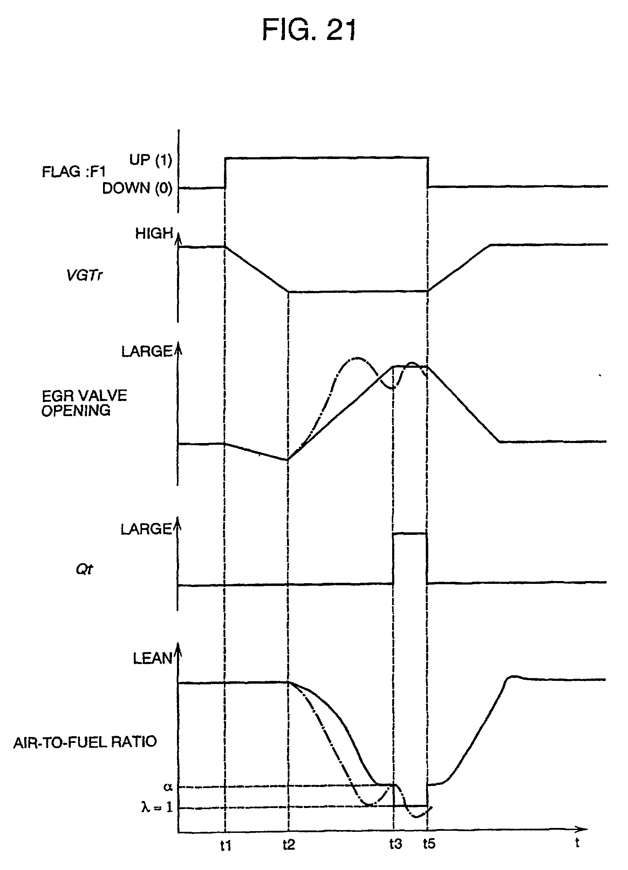

Figure 21 is a time chart showing changes in VGT nozzle cross-sectional area, EGR valve opening, the amount of fuel injection and actual combustion chamber air-to-fuel ratio relating to the exhaust gas recirculation control shown in Figure 20A and 20B. When refreshing the catalyst 22, the fuel amount correction control, the exhaust gas recirculation control and the variable geometric turbocharger control are separately implemented in a specified order. As shown in Figure 21, when the refresh flag F1 is set up (F1 = 1) at a point of time t1 as a result of a rise in the level of NOx absorption of the catalyst 22, the turbocharger 25 is caused to correctly narrow a target nozzle cross-sectional area *VGTr*. As a result, the exhaust pressure on the upstream side of the turbocharger 25 rises and the exhaust gas recirculation ratio increases, so that the EGR valve 24 decreases its opening gradually so as to keep the average combustion chamber air-to-fuel ratio. When the amount of charging air increases sufficiently as a result of a rise in supercharging pressure at the point of time t2, then, the supercharge flag Fv is set up (Fv = 1), the exhaust gas recirculation valve 24 starts increasing its opening so as to change the average combustion chamber air-to-fuel ratio toward the rich side between points of time t2 and t3. In this instance, the basic exhaust gas recirculation ratio *EGRb*, which is a target exhaust gas recirculation ratio *EGRt* in the exhaust gas recirculation control, is added by the specified value *EGRd1* every cycle of the control and gradually increased until it reaches the specified exhaust gas recirculation ratio *EGRm*. Accordingly, since the opening of the exhaust gas recirculation valve 24 is gradually increased and, in consequence, there occurs no sharp fluctuation in the amount of exhaust gas recirculation, the average combustion chamber air-to-fuel ratio changes steadily from a lean side to a rich side and is settled to a value α that provides exhaust gas with an oxygen concentration of approximately 2% without overshooting at a point of time t3. At this point of time, the EGR flag Fe is set up (Fe = 1). That is, if increasing a target value of the exhaust gas recirculation control to the specified exhaust gas recirculation ratio *EGRm* at a stretch with the set up of the EGR flag Fe as a turning point, although opening of the exhaust gas recirculation valve 24 increases following the increase in the target value through the feedback control, the exhaust gas recirculation valve 24 is hard to be prevented from overshooting. In particular, although, in the case of implementing the PID control, the responsivness of the exhaust gas recirculation control to a change in a target value is risen through the integral and differential actions, the rise in responsiveness causes the exhaust gas recirculation valve 24 to overshoot in excess as shown by a dotted line in Figure 21. To the contrary, the exhaust gas recirculation valve 24 is prevented from overshooting by increasing gradually the target value as described above. When the EGR flag Fe turns up (Fe = 1), a correction is made to increase the amount of fuel *Qt*, as a result of which an actual combustion chamber air-to-fuel ratio reaches a value near or on the rich side from the stoichiometric air-to-fuel ratio with an effect of lowering the oxygen concentration of exhaust gas, so as to refresh the catalyst 22. Because the exhaust gas recirculation ratio is gradually increased to the specified exhaust gas recirculation ratio *EGRm* such as described above, it is possible to increase the amount of fuel injection in the state that the amount of charging air and the exhaust gas recirculation ratio are stable, so that the combustion chamber air-to-fuel ratio is changed as aimed. Accordingly, it is prevented to cause emission levels of NOx and smoke due to fluctuations in air-to-fuel ratio even when an average combustion chamber air-to-fuel ratio is changed to a value near the stoichiometric air-to-fuel ratio on the rich side.

When the NOx are released sufficiently from the catalyst 22 in a period between the points of time t3 and t4, while the fuel amount correction control is immediately terminated, the basic exhaust gas recirculation ratio *EGRb*, which is a target exhaust gas recirculation ratio *EGRt* in the exhaust gas recirculation control, is subtracted by the specified value *EGRd2* every cycle of the control and gradually decreased to a value that is taken immediately before implementation of the control of releasing NOx until the correction value of exhaust gas recirculation ratio *EGRx* reaches zero (0). Accordingly, since the actual combustion chamber air-to-fuel ratio is prevented from sharply changing, which is always desirable for stable combustion and a decrease in smoke generation. In this instance, although, because the specified value *EGRd2* is greater than the specified value *EGRd1*, the basic exhaust gas recirculation ratio *EGRb* changes a little more sharply when it decreases than when it increases, whereas the sharp change in the exhaust gas recirculation ratio *EGRb* has no adverse effect on emission levels and counts for nothing.

In place of making a corrective increase in amount of fuel in combination with implementation of the primary fuel injection together with the pre-fuel infection while the engine 1 operates with higher engine loads or the post-fuel injection while the engine 1 operates with lower engine loads in order to refresh the catalyst 22, it may be done only when the engine operates with lower engine loads to make a corrective increase in amount of fuel and splay the corrected amount of fuel partly through the primary fuel injection and partly through the post-fuel injection. Further, it may be acceptable to spray the corrected amount of fuel only through the primary fuel injection without implementing the secondary fuel injection - the pre-fuel injection or the post-fuel injection. In such a case, it is preferred to retard a little the timing of primary fuel injection. Furthermore, the primary fuel injection itself may be split into a multiple number of shots which are made at timings near a top dead center of a compression stroke. As shown in Figure 22 by way of example, the primary fuel injection may be made to spray a given amount of fuel through one shot fuel injection or blanket fuel injection at a timing near a top dead center of a compression stroke as shown by a time chart (A), through two shot fuel injection at consecutive timings near a top dead center of a compression stroke as shown by a time chart (B), or through three shot fuel injection at consecutive timings near a top dead center of a compression stroke as shown by a time chart (C). The two or three shot fuel injection promotes atomization of fuel and mixing the atomized fuel with air, as a result of which improvement of a utilization rate of air in the combustion chamber 4 and, in consequence, significant improvement of combustion is provided, so as to restrain generation of smoke.

As demonstrated in Figure 23 which shows an experimental result of a comparison test of generation of smoke relative to a crank angle (CA) at which the two or three shot fuel injection is terminated for various injection intervals (350 to 900 µsec.) between adjacent shots when a given amount of fuel is sprayed through one, two or three shot fuel injection, the amount of smoke is reduced more as the injection interval is shortened to a certain extent in the case of the two or the three shot fuel injection as compared with the one shot fuel injection.

As demonstrated in Figures 24 and 25, since, in addition to a significant decrease in the amount of smoke due to the two or the three shot fuel injection which is accompanied by increased generation of heat, a timing of completion of combustion is retarded, the temperature and the pressure of exhaust gas are risen. As a result, the turbocharger 25 rises supercharging air pressure with high responsiveness.

In the exhaust gas recirculation control shown in Figures 20A and 20B as another embodiment, the same fuel injection control is implemented when the engine 1 is in an accelerative operation state as well as when the catalyst 22 is refreshed as shown in Figures 6A and 6B. However, during acceleration, a corrective increase in amount of fuel may be made when exhaust gas recirculation becomes stable in state and the supercharging air pressure of the turbocharger 25 reaches a target level of pressure after driving the variable vanes 21 of the turbocharger 25 and the exhaust gas recirculation valve 24 simultaneously. Furthermore, in order to prevent the catalyst 22 from releasing NOx, the exhaust gas recirculation valve 24 may be suspended in operation not when an oxygen concentration of exhaust gas of approximately 2% is reached but before the average combustion chamber air-to-fuel ratio reaches a specified value at which a sharp increase in the amount of smoke occurs, The exhaust gas recirculation may be of course feedback controlled on the basis of an output from a linear oxygen (O₂) sensor 17.

## Claims

1. A control system for controlling a diesel engine (1) which is equipped with a fuel injector (5) operative to spray fuel directly into a combustion chamber (4) of said diesel engine and a NOx absorbent (22) disposed in an exhaust line (20) of said diesel engine (1) and operative to absorb NOx in an exhaust gas having a excessively high oxygen concentration and release said NOx as said oxygen concentration lowers, said control system comprising fuel injection control means (35a) for controlling fuel injection through said fuel injector (5) according at least to operating conditions of said diesel engine (1), fuel injection correction means (35b) for providing an increase in the amount of fuel that is sprayed through said fuel injector (5) so as to lower said oxygen concentration so as thereby to cause said NOx absorbent (22) to release said NOx,
exhaust gas regulation means (24) for admitting and regulating an amount of said exhaust gas that is partly admitted into said intake line (10) through an exhaust gas recirculation passage (23), and
exhaust gas recirculation control means (35c) for controlling said exhaust gas regulation means (24) so as to regulate a value relating to an exhaust gas recirculation ratio,
**characterized in that** said exhaust gas recirculation control means (35c) are configured to increase said value relating to said exhaust gas recirculation ratio prior to said increase in the amount of fuel by said fuel injection correction means (35b) to judge whether exhaust gas recirculation has become stable in said combustion chamber (4) or whether said exhaust gas regulation means (24) has completed its regulative operation, and to allow said fuel injection correction means (35b) to provide said increase in the amount of fuel when exhaust gas recirculation has become stable in said combustion chamber (4) or when said exhaust gas regulation means (24) has completed its regulative operation.

2. A control system for controlling a diesel engine as defined in claim 1, **characterized in that** said exhaust gas recirculation control means (35c) controls said exhaust gas regulation means (24) so as to decrease said value relating to an exhaust gas recirculation ratio after completion of increasing said amount of fuel by said fuel injection correction means (35b).

3. A control system for controlling a diesel engine as defined in claim 1, **characterized in that** said fuel injection control means (35a) divides said fuel injection into primary fuel injection made at a point of time near a top dead center of a compression stroke each of cylinders of said diesel engine (1) and secondary fuel injection made separately from said primary fuel injection when said fuel injection correction means (35b) increases said amount of fuel.

4. A control system for controlling a diesel engine as defined in claim 3, **characterized in that** said secondary fuel injection is made in a period between the beginning of an intake stroke of each of cylinders of said diesel engine (1) and a mid-point of an expansion stroke of said cylinder and, when causing said NOx absorbent to release said NOx, said exhaust gas recirculation control means (3 5c) controls said exhaust gas regulation means (24) so as to increase said value to a specified value and said fuel injection correction means (35b) causes an increase in said amount of fuel for a specified period of time so as to lower said oxygen concentration after attainment of said specified value.

5. A system for controlling a diesel engine as defined in claim 1, **characterized in that** said fuel injection control means (35a) divides said fuel injection into more-than-one parts at a point of time near a top dead center of a compression stroke of each of cylinders when said fuel injection correction means (35b) increases said amount of fuel..

6. A control system for controlling a diesel engine as defined in claim 1, **characterized in that** said exhaust gas recirculation control means (35c) feedback controls said exhaust gas regulation means (24) to provide a target exhaust gas recirculation ratio according to an operating condition of said diesel engine (1), and changes said target exhaust gas recirculation ratio gradually so as thereby to cause an increase in said value prior to increasing said amount of fuel by said fuel injection correction means (35b).

7. A control system for controlling a diesel engine as defined in claim 1, further **characterized by** intake air regulation means (25) for regulating an amount of intake air that is charged in said combustion chamber (4) of said diesel engine (1), and charge control means (30) for controlling said intake air regulation means (25) 50 as to increase said amount of intake air when said fuel injection correction means (35b) increases said amount of fuel.

8. A control system for controlling a diesel engine as defined in claim 7, **characterized in that** said fuel injection correction means (35b) starts an increase in said amount of fuel after said charge control means (25) achieves an increase in said amount of intake air to a specified value.

9. A control system for controlling a diesel engine as defined in claim 7, **characterized in that** said fuel injection control means (3 5a) divides said fuel injection into primary fuel injection made at a point of time near a top dead center of a compression stroke and a secondary fuel injection made separately from said primary fuel injection.

10. A control system for controlling a diesel engine as defined in claim 9, **characterized in that** said secondary fuel injection is made in one of a period between intake and compression strokes of each of cylinders and a period between crank angles of 100 and 25° after a top dead center of a compression stroke of each of cylinders.

11. A control system for controlling a diesel engine as defined in claim 7, **characterized in that** said exhaust gas recirculation control means (35c) starts said exhaust gas regulation means (24) to increase said value after said charge control means (30) achieves an increase in said amount of intake air to a specified value.

12. A control system for controlling a diesel engine as defined in claim 7, **characterized in that** said intake air regulation means (25) comprises a turbosupercharger operative to supercharge intake air with said exhaust gas, and said fuel injection control means (3 5a) divides said fuel injection into primary fuel injection made at a point of time near a top dead center of a compression stroke of each of cylinders and secondary fuel injection made in a period between expansion and exhaust strokes of each of cylinders when said fuel injection correction means (35b) increases said amount of fuel.

13. A system for controlling a diesel engine as defined in claim 7, **characterized in that** said intake air regulation means (25) comprises a turbosupercharger operative to supercharge intake air with said exhaust gas, and said fuel injection control means (35a) divides said fuel injection into more-than-one parts at a point of time near a top dead center of a compression stroke of each of cylinders when said fuel injection correction means (35b) increases said amount of fuel.

14. A system for controlling a diesel engine as defined in claim 7, and further **characterized by** an exhaust gas recirculation passage (23) through which said exhaust gas flows partly into said intake line (10) of said diesel engine (1) and exhaust gas regulation means (24) for regulating an amount of said exhaust gas that is admitted into said intake line (10) through said exhaust gas recirculation passage (23), wherein said intake air regulation means (25) comprises a turbosupercharger having a turbine (21) and a variable pressure mechanism (30) operative to vary exhaust gas pressure for said turbine (21) so as to increase said exhaust gas pressure when increasing said amount of intake air.

## Patentansprüche

1. Steuersystem zum Steuern einer Diesel-Brennkraftmaschine (1), die mit einem Kraftstoffeinspritzer (5), der Kraftstoff direkt in eine Brennkammer (4) der Diesel-Brennkraftmaschine einspritzt, und einem NOx-Absorber (22) ausgestattet ist, der in einer Abgasleitung (20) der Diesel-Brennkraftmaschine (1) angeordnet ist und NOx in einem Abgas absorbiert, das eine übermäßig hohe Sauerstoffkonzentration aufweist, und das NOx freigibt, wenn sich die Sauerstoffkonzentration verringert, wobei das Steuersystem eine Kraftstoffeinspritz-Steuereinrichtung (35a) beinhaltet, die die Kraftstoffeinspritzung durch den Kraftstoffeinspritzer (5) gemäß wenigstens einem Betriebszustand der Diesel-Brennkraftmaschine (1) steuert, eine Kraftstoffeinspritz-Korrektureinrichtung (35b), die einen Anstieg der Kraftstoffmenge erzeugt, die durch den Kraftstoffeinspritzer (5) gespritzt wird, um die Sauerstoffkonzentration zu verringern und **dadurch** zu bewirken, dass der NOx-Absorber (22) das NOx freigibt,
eine Abgasreguliereinrichtung (24), die eine Abgasmenge zuleitet und reguliert, die zum Teil in die Ansaugleitung (10) durch einen Abgas-Rückführleitungsweg (23) zugeleitet wird, und
eine Abgas-Rückführsteuereinrichtung (35c), die die Abgasreguliereinrichturig (24) derart steuert, dass ein Wert reguliert wird, der sich auf einen Abgasrückführanteil bezieht, **dadurch gekennzeichnet, dass**
die Abgas-Rückführsteuereinrichtung (35c) derart beschaffen ist, dass sie den Wert, der sich auf den Abgasrückführanteil bezieht, vor dem Anstieg der Kraftstoffmenge durch die Kraftstoffeinspritz-Korrektureinrichtung (35b) erhöht, dass sie beurteilt, ob die Abgasrückführung in der Brennkammer (4) stabil geworden ist oder die Abgas-Reguliereinrichtung (24) ihren Regulierbetrieb beendet hat, und dass sie zuläßt, dass die Kraftstoffeinspritz-Korrektureinrichtung (35b) den Anstieg der Kraftstoffmenge erzeugt, wenn die Abgasrückführung in der Brennkammer (4) stabil geworden ist oder die Abgas-Reguliereinrichtung (24) ihren Regulierbetrieb beendet hat.

2. Steuersystem zum Steuern einer Diesel-Brennkraftmaschine nach Anspruch 1, **dadurch gekennzeichnet, dass** die Abgas-Rückführsteuereinrichtung (35c) die Abgas-Reguliereinrichtung (24) derart steuert, dass der Wert, der sich auf einen Abgasrückführanteil bezieht, verringert wird, nachdem die Erhöhung der Kraftstoffmenge durch die Kraftstoffeinspritz-Korrektureinrichtung (35b) abgeschlossen ist.

3. Steuersystem zum Steuern einer Diesel-Brennkraftmaschine nach Anspruch 1, **dadurch gekennzeichnet, dass** die Kraftstoffeinspritz-Steuereinrichtung (35a) die Kraftstoffeinspritzung in eine primäre Kraftstoffeinspritzung, die zu einem Zeitpunkt in der Nähe eines oberen Todpunktes eines Kompressionshubs jedes der Zylinder der Diesel-Brennkraftmaschine (1) vorgenommen wird, und eine sekundäre Kraftstoffeinspritzung unterteilt, die separat von der primären Kraftstoffeinspritzung vorgenommen wird, wenn die Kraftstoffeinspritz-Korrektureinrichtung (35b) die Kraftstoffmenge erhöht.

4. Steuersystem zum Steuern einer Diesel-Brennkraftmaschine nach Anspruch 3, **dadurch gekennzeichnet, dass** die sekundäre Kraftstoffeinspritzung in einem Zeitraum zwischen dem Beginn eines Ansaughubs jedes der Zylinder der Diesel-Brennkraftmaschine (1) und einem Mittelpunkt eines Ausdehnungshubs des Zylinders erfolgt, und wenn bewirkt wird, dass der NOx-Absorber das NOx freigibt, die Abgas-Rückführsteuereinrichtung (35c) die Abgas-Reguliereinrichtung (24) derart steuert, dass sie den Wert auf einen festgelegten Wert erhöht und die Kraftstoffeinspritz-Korrektureinrichtung (35b) einen Anstieg der Kraftstoffmenge für einen festgelegten Zeitraum bewirkt, so dass die Sauerstoffkonzentration nach dem erreichen des festgelegten Wertes verringert wird.

5. System zum Steuern einer Diesel-Brennkraftmaschine nach Anspruch 1, **dadurch gekennzeichnet, dass** die Kraftstoffeinspritz-Steuereinrichtung (35a) die Kraftstoffeinspritzung in mehrere Teile zu einem Zeitpunkt in der Nähe eines oberen Todpunktes eines Kompressionshubs jedes der Zylinder unterteilt, wenn die Kraftstoffeinspritz-Korrektureinrichtung (35b) die Kraftstoffmenge erhöht.

6. Steuersystem zum Steuern einer Diesel-Brennkraftmaschine nach Anspruch 1, **dadurch gekennzeichnet, dass** die Abgas-Rückführsteuereinrichtung (35c) die Abgas-Reguliereinrichtung (24) durch Rückmeldung derart steuert, dass ein Abgasrückführsollanteil gemäß einem Betriebszustand der Diesel-Brennkraftmaschine (1) erzeugt wird, und den Abgasrückführsollanteil allmählich ändert, um **dadurch** einen Anstieg des Wertes vor dem Anstieg der Kraftstoffmenge durch die Kraftstoffeinspritz-Korrektureinrichtung (35b) zu bewirken.

7. Steuersystem zum Steuern einer Diesel-Brennkraftmaschine nach Anspruch 1, weiterhin **gekennzeichnet durch** eine Ansaugluft-Reguliereinrichtung (25), die eine Ansaugluftmenge reguliert, die in die Brennkammer (4) der Diesel-Brennkraftmaschine (1) geladen wird, und eine Ladungs-Steuereinrichtung (30), die die Ansaugluft-Reguliereinrichtung (25) derart steuert, dass die Ansaugluftmenge erhöht wird, wenn die Kraftstoffeinspritz-Korrektureinrichtung (35b) die Kraftstoffmenge erhöht.

8. Steuersystem zum Steuern einer Diesel-Brennkraftmaschine nach Anspruch 7, **dadurch gekennzeichnet, dass** die Kraftstoffeinspritz-Korrektureinrichtung (35b) eine Erhöhung der Kraftstoffmenge beginnt, nachdem die Ladungs-Steuereinrichtung (25) eine Erhöhung der Ansaugluftmenge auf einen festgelegten Wert erreicht hat.

9. Steuersystem zum Steuern einer Diesel-Brennkraftmaschine nach Anspruch 7, **dadurch gekennzeichnet, dass** die Kraftstoffeinspritz-Steuereinrichtung (35a) die Kraftstoffeinspritzung in eine primäre Kraftstoffeinspritzung, die zu einem Zeitpunkt in der Nähe eines oberen Todpunktes eines Kompressionshubs ausgeführt wird, und eine sekundäre Kraftstoffeinspritzung unterteilt, die separat von der primären Kraftstoffeinspritzung vorgenommen wird.

10. Steuersystem zum Steuern einer Diesel-Brennkraftmaschine nach Anspruch 9, **dadurch gekennzeichnet, dass** die sekundäre Kraftstoffeinspritzung in einem Zeitraum zwischen Ansaug- und Kompressionshüben jedes der Zylinder und einem Zeitraum zwischen Kurbelwinkeln von 10° und 25° nach einem oberen Todpunkt eines Kompressionshubs jedes Zylinders erfolgt.

11. Steuersystem zum Steuern einer Diesel-Brennkraftmaschine nach Anspruch 7, **dadurch gekennzeichnet, dass** die Abgas-Rückführsteuereinrichtung (35c) die Abgasreguliereinrichtung (24) startet, um den Wert zu erhöhen, nachdem die Ladungssteuereinrichtung (30) einen Anstieg der Ansaugluftmenge auf einen festgelegten Wert erreicht hat.

12. Steuersystem zum Steuern einer Diesel-Brennkraftmaschine nach Anspruch 7, **dadurch gekennzeichnet, dass** die Ansaugluft-Reguliereinrichtung (25) einen Turbolader enthält, der Ansaugluft mit dem Abgas lädt, und die Kraftstoffeinspritz-Steuereinrichtung (35a) die Kraftstoffeinspritzung in eine primäre Kraftstoffeinspritzung, die zu einem Zeitpunkt in der Nähe eines oberen Todpunktes eines Kompressionshubs jedes der Zylinder erfolgt, und eine sekundäre Kraftstoffeinspritzung unterteilt, die in einem Zeitraum zwischen Ausdehnungs- und Ausstoßhüben jedes der Zylinder vorgenommen wird, wenn die Kraftstoffeinspritz-Korrektureinrichtung (35b) die Kraftstoffmenge erhöht.

13. System zum Steuern einer Diesel-Brennkraftmaschine nach Anspruch 7, **dadurch gekennzeichnet, dass** die Ansaugluft-Reguliereinrichtung (25) einen Turbolader enthält, der Ansaugluft mit dem Abgas lädt, und die Kraftstoffeinspritz-Steuereinrichtung (35a) die Kraftstoffeinspritzung in mehrere Teile zu einem Zeitpunkt in der Nähe eines oberen Todpunktes eines Kompressionshubs jedes Zylinders unterteilt, wenn die Kraftstoffeinspritz-Korrektureinrichtung (35b) die Kraftstoffmenge erhöht.

14. System zum Steuern einer Diesel-Brennkraftmaschine nach Anspruch 7, weiterhin **gekennzeichnet durch** einen Abgas-Rückführleitungsweg (23), **durch** den das Abgas zum Teil in die Ansaugleitung (10) der Diesel-Brennkraftmaschine (1) strömt, und eine Abgas-Reguliereinrichtung (24), die eine Abgasmenge reguliert, die in die Ansaugleitung (10) **durch** den Abgas-Rückführleitungsweg (23) geleitet wird, wobei die Ansaugluft-Reguliereinrichtung (25) einen Turbolader enthält, der über eine Turbine (21) und einen Druckänderungsmechanismus (30) verfügt, der den Abgasdruck für die Turbine (21) derart ändem kann, dass der Abgasdruck erhöht wird, wenn die Ansaugluftmenge erhöht wird.

## Revendications

1. Dispositif pour contrôler un moteur diesel (1) qui est équipé avec un injecteur de combustible (5) actif pour pulvériser le combustible directement dans une chambre de combustion (4) dudit moteur diesel et un absorbant NOx (22) disposé dans un conduit d'évacuation (20) dudit moteur diesel (1) et actif pour absorber NOx d'un gaz d'évacuation ayant une concentration d'oxygène excessivement élevée et libère ledit NOx quand ladite concentration d'oxygène baisse, ledit dispositif de contrôle comprenant le moyen de contrôle de l'injection du combustible (35a) pour contrôler l'injection du combustible par ledit injecteur de combustible (5) conforme au moins aux conditions de fonctionnement dudit moteur diesel (1), le moyen de correction de l'injection de combustible (35b) pour prévoir une augmentation dans la quantité de combustible qui est pulvérisé par ledit injecteur de combustible (5) de manière à baisser ladite concentration d'oxygène de manière à causer par-là ledit absorbant NOx (22) délivrer ledit NOx,
- le moyen de réglage des gaz d'évacuation (24) pour l'admission et le réglage d'une quantité dudit gaz d'évacuation qui est partiellement admis dans ledit conduit d'aspiration (10) par un passage de recyclage des gaz d'évacuation (23), et
- le moyen de contrôle du recyclage des gaz d'évacuation (35c) pour le contrôle dudit moyen de réglage des gaz d'évacuation (24) de manière à régler une valeur relative au rapport de recyclage des gaz d'évacuation,
**caractérisé en ce que**, ledit moyen de contrôle du recyclage des gaz d'évacuation (35c) est configuré pour croître ladite valeur relative audit rapport de recyclage des gaz d'évacuation avant de ladite augmentation dans la quantité de combustible par ledit moyen de correction de l'injection de combustible (35b) pour juger si le recyclage des gaz d'évacuation a devenu stable dans ladite chambre de combustion (4) ou si ledit moyen de réglage des gaz d'évacuation (24) a accompli son opération de réglage, et pour permettre audit moyen de correction de l'injection de combustible (35b) de prévoir ladite augmentation dans la quantité de combustible quand le recyclage des gaz d'évacuation a devenu stable dans ladite chambre de combustion (4) ou quand ledit moyen de réglage des gaz d'évacuation (24) a accompli sa opération de réglage.

2. Dispositif pour contrôler un moteur diesel selon la revendication 1, **caractérisé en ce que**, ledit moyen de contrôle du recyclage des gaz d'évacuation (35c) contrôle ledit moyen de réglage des gaz d'évacuation (24) de manière à décroître ladite valeur relative à un rapport de recyclage des gaz d'évacuation après l'accomplissement de l'augmentation de ladite quantité de combustible par ledit moyen de correction de l'injection de combustible (35b).

3. Dispositif pour contrôler un moteur diesel selon la revendication 1, **caractérisé en ce que**, ledit moyen de contrôle de l'injection de combustible (35a) divise ladite injection de combustible dans une injection de combustible primaire faite à une division de temps près du point mort supérieur de chaque course de compression des cylindres dudit moteur diesel (1) et l'injection de combustible secondaire faite séparément de ladite injection de combustible primaire quand ledit moyen de correction de l'injection de combustible (35b) croît ladite quantité de combustible.

4. Dispositif pour contrôler un moteur diesel selon la revendication 3, **caractérisé en ce que**, ladite injection de combustible secondaire est faite dans une période entre le commencement de la course d'aspiration de chacun des cylindres dudit moteur diesel (1) et un point de milieu d'une course de détente dudit cylindre et, quand causant ledit absorbant NOx de délivrer ledit NOx, ledit moyen de contrôle du recyclage des gaz d'évacuation (35c) contrôle ledit moyen de réglage des gaz d'évacuation (24) de manière à croître ladite valeur à une valeur spécifiée et ledit moyen de correction de l'injection de fuel (35b) cause une augmentation dans ladite quantité de combustible pour une période de temps spécifiée de manière à baisser ladite concentration d'oxygène après l'attouchement de ladite valeur spécifiée.

5. Dispositif pour contrôler un moteur diesel selon la revendication 1, **caractérisé en ce que**, ledit moyen de contrôle de l'injection de combustible (35a) divise ladite injection de combustible en plus d'une part à une division de temps près du point mort supérieur d'une course de compression de chacun des cylindres, quand ledit moyen de correction de l'injection de combustible (35b) croît ladite quantité de combustible.

6. Dispositif pour contrôler un moteur diesel selon la revendication 1, **caractérisé en ce que**, la connexion dudit moyen de contrôle du recyclage des gaz d'évacuation (35c) contrôle ledit moyen de réglage des gaz d'évacuation (24) pour prévoir un rapport de recyclage des gaz d'évacuation cible selon un régime de fonctionnement dudit moteur diesel (1), et change ledit rapport de recyclage des gaz d'évacuation cible graduellement de manière à causer par là une augmentation dans ladite valeur avant de croître ladite quantité de combustible par ledit moyen de correction de l'injection de combustible (35b).

7. Dispositif pour contrôler un moteur diesel selon la revendication 1, **caractérisé en outre par** le moyen de réglage de l'air frais (25) pour régler une quantité d'air frais qui est chargée dans ladite chambre de combustion (4) dudit moteur diesel (1) et le moyen de contrôle de la charge (30) pour contrôler ledit moyen de réglage de l'air frais (25) de manière à croître ladite quantité d'air frais quand ledit moyen de correction de l'injection du combustible (35b) croît ladite quantité de combustible.

8. Dispositif pour contrôler un moteur diesel selon la revendication 7, **caractérisé en ce que**, ledit moyen de correction de l'injection de combustible (35b) commence une augmentation dans ladite quantité de combustible, après que ledit moyen de contrôle de la charge (25) réalise une augmentation dans ladite quantité d'air frais à une valeur spécifiée.

9. Dispositif pour contrôler un moteur diesel selon la revendication 7, **caractérisé en ce que**, ledit moyen de contrôle de l'injection de combustible (35a) divise ladite injection de combustible dans une injection de combustible primaire faite à une division de temps près du point mort supérieur d'une course de compression et une injection de combustible secondaire faite séparément de ladite injection de combustible primaire.

10. Dispositif pour contrôler un moteur diesel selon la revendication 9, **caractérisé en ce que**, ladite injection de combustible secondaire est faite dans une période entre les courses d'admission et de compression de chacun des cylindres et une période entre les angles de retour de 100 et 25° après un point mort supérieur d'une course de compression de chacun des cylindres.

11. Dispositif pour contrôler un moteur diesel selon la revendication 7, **caractérisé en ce que**, ledit moyen de contrôle du recyclage des gaz d'évacuation (35c) fait démarrer ledit moyen de réglage des gaz d'évacuation (24) pour croître ladite valeur après que ledit moyen de contrôle de la charge (30) réalise une augmentation dans ladite quantité d'air frais à une valeur spécifiée.

12. Dispositif pour contrôler un moteur diesel selon la revendication 7, **caractérisé en ce que**, ledit moyen de réglage de l'air frais (25) comprend une turbine de surcharge active pour suralimenter l'air frais avec lesdits gaz d'évacuation, et ledit moyen de contrôle de l'injection de combustible (35a) divise ladite injection de combustible dans une injection de combustible primaire faite à une division de temps près du point mort supérieur de la course de compression de chacun des cylindres et une injection de combustible secondaire faite dans une période entre les courses de détente et d'évacuation de chacun des cylindres quand ledit moyen de correction de l'injection de combustible (35b) croît ladite quantité de combustible.

13. Dispositif pour contrôler un moteur diesel selon la revendication 7, **caractérisé en ce que**, ledit moyen de réglage de l'air frais (25) comprend une turbine de surcharge active pour suralimenter l'air frais avec lesdits gaz d'évacuation et ledit moyen de contrôle de l'injection du combustible (35a) divise ladite injection de combustible en plus d'une part à une division de temps près du point mort supérieur d'une course de compression de chacun des cylindres quand ledit moyen de correction de l'injection de combustible (35b) croît ladite quantité de combustible.

14. Dispositif pour contrôler un moteur diesel selon la revendication 7, **caractérisé en outre par** un passage de recyclage des gaz d'évacuation (23) par lequel ledit gaz d'évacuation s'écoule partiellement dans ledit conduit d'aspiration (10) dudit moteur diesel (1) et le moyen de réglage des gaz d'évacuation (24) pour le réglage d'une quantité dudit gaz d'évacuation qui est admis dans ledit conduit d'aspiration (10) par ledit passage de recyclage des gaz d'évacuation (23), où ledit moyen de réglage de l'air frais (25) comprend une turbine de surcharge ayant une turbine (21) et un mécanisme de pression variable (30) actif pour varier la pression des gaz d'évacuation pour ladite turbine (21) de manière à croître ladite pression des gaz d'évacuation quand ladite quantité d'air frais croît.
